(19) Europäisches Patentamt
European Patent Office
Office européen des brevets

(11) **EP 4 177 279 A1**

(12) **EUROPEAN PATENT APPLICATION**
published in accordance with Art. 153(4) EPC


(43) Date of publication:
**10.05.2023 Bulletin 2023/19**

(21) Application number: **21834197.2**

(22) Date of filing: **02.07.2021**

(51) International Patent Classification (IPC):
***C08F 20/26*** *(2006.01)* ***C08K 5/34*** *(2006.01)*
***C08K 5/521*** *(2006.01)* ***C08L 33/14*** *(2006.01)*
***G02B 5/22*** *(2006.01)*

(52) Cooperative Patent Classification (CPC):
**C08F 20/26; C08K 5/34; C08K 5/521; C08L 33/14; G02B 5/22;** Y02E 10/549

(86) International application number:
**PCT/JP2021/025213**

(87) International publication number:
**WO 2022/004889 (06.01.2022 Gazette 2022/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.07.2020 JP 2020115794**



(71) Applicant: **TOPPAN INC.**
**Tokyo 110-0016 (JP)**

(72) Inventors:
- **IWATA Reiko**
**Tokyo 110-0016 (JP)**
- **HIRAI Yuri**
**Tokyo 110-0016 (JP)**
- **MIYOSHI Hanae**
**Tokyo 110-0016 (JP)**
- **FURUKAWA Shigeki**
**Tokyo 110-0016 (JP)**

(74) Representative: **Hoffmann Eitle**
**Patent- und Rechtsanwälte PartmbB**
**Arabellastraße 30**
**81925 München (DE)**


(54) **INFRARED BLOCKING FILTER, FILTER FOR SOLID-STATE IMAGING ELEMENT, SOLID-STATE IMAGING ELEMENT, AND METHOD FOR PRODUCING FILTER FOR SOLID-STATE IMAGING ELEMENT**


(57) The infrared cut filter according to the present invention comprises a cyanine dye including a cation having a polymethine and a nitrogen-containing heterocycle at each end of the polymethine, and a tris(pentafluoroethyl)trifluorophosphate anion; and a copolymer including a first repeating unit derived from a first monomer that is an acrylic monomer having a cyclic ether group, and a second repeating unit derived from a second monomer that is a monomer having a functional group that reacts with the cyclic ether group.


FIG.1

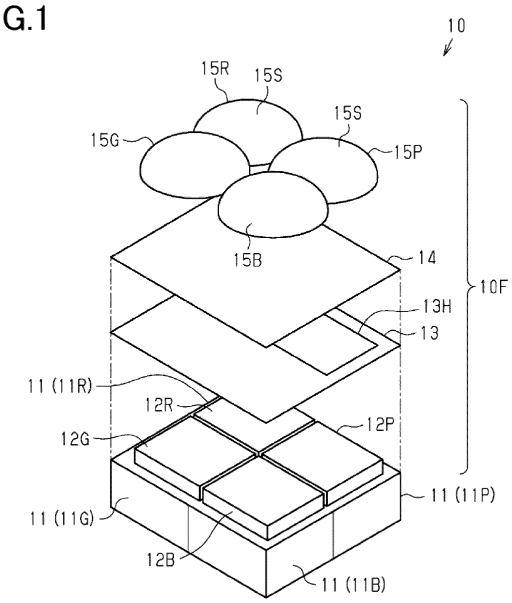

## Description

[Technical Field]

The present disclosure is related to an infrared cut filter, a solid-state image sensor filter, a solid-state image sensor, and a method of producing a solid-state image sensor filter.

[Background Art]

Solid-state image sensors such as CMOS image sensors and CCD image sensors have photoelectric conversion devices that convert the intensity of light into an electrical signal. A solid-state image sensor can detect different parts of light corresponding to a plurality of colors. A first example of a solid-state image sensor includes a color filter for each color and a photoelectric conversion device for each color, and detects the light of each color using the photoelectric conversion device for the corresponding color (see, for example, PTL 1). A second example of a solid-state image sensor includes an organic photoelectric conversion device and inorganic photoelectric conversion devices, and detects the light of each color with the corresponding photoelectric conversion device without using any color filter (see, for example, PTL 2).

A solid-state image sensor has an infrared cut filter over the photoelectric conversion devices. The infrared absorbing dye contained in the infrared cut filter absorbs infrared light to cut out the infrared light, which may be detected by the photoelectric conversion devices. This improves the accuracy of detecting visible light using the photoelectric conversion devices. An infrared cut filter contains, for example, a cyanine dye that is an infrared absorbing dye (see, for example, PTL 3).

[Citation List]

[Patent Literature]

[PTL 1] JP 2003-060176 A
[PTL 2] JP 2018-060910 A
[PTL 3] JP 2007-219114 A

[Summary of the Invention]

[Technical Problem]

A solid-state image sensor having an infrared cut filter is mounted onto a substrate by reflow soldering. At this time, the infrared cut filter is heated to a temperature at which the solder melts. Heating the infrared cut filter denatures the cyanine dye, and as a result, the infrared transmittance of the heated infrared cut filter may change from that of the infrared cut filter before being heated.

Meanwhile, the infrared cut filter may be patterned using dry etching. In this case, first, a resist pattern is formed on the infrared cut filter. After etching the infrared cut filter using the resist pattern, the resist pattern is removed from the infrared cut filter. A stripping liquid used to remove the resist pattern from the infrared cut filter causes part of the cyanine dye contained in the infrared cut filter to elute from the infrared cut filter when it comes into contact with the infrared cut filter. This reduces the amount of infrared light expected to be absorbed by the infrared cut filter.

An object of the present invention is to provide an infrared cut filter, a solid-state image sensor filter, a solid-state image sensor, and a method of producing the solid-state image sensor capable of improving the heat resistance and the resistance to a stripping liquid.

[Solution to Problem]

According to one aspect, an infrared cut filter is provided. The infrared cut filter includes a cyanine dye including a cation having a polymethine, and two nitrogen-containing heterocycles each at respective ends of the polymethine, and a tris(pentafluoroethyl)trifluorophosphate anion; and a copolymer including a first repeating unit derived from a first monomer that is an acrylic monomer having a cyclic ether group and represented by Formula (1) below, and a second repeating unit derived from a second monomer that is a monomer having a functional group that reacts with the cyclic ether group.

[Chemical Formula 1]

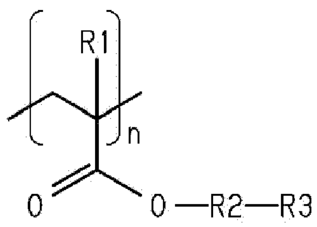

...... Formula (1)

In Formula (1), R1 is a hydrogen atom or a methyl group, and R2 is a single bond, a linear alkylene group having one or more carbon atoms, or a branched alkylene group having three or more carbon atoms. R3 is a cyclic ether group having an oxygen atom and two or more carbon atoms.

According to another aspect, a method of producing an infrared cut filter is provided. The method of producing an infrared cut filter includes: forming an infrared cut filter including a cyanine dye including a cation having a polymethine, and two nitrogen-containing heterocycles each located at respective ends of the polymethine, and a tris(pentafluoroethyl)trifluorophosphate anion, and a copolymer including a first repeating unit derived from a first monomer that is an acrylic monomer having a cyclic ether group and represented by Formula (1) below, and a second repeating unit derived from a second monomer that is a monomer having a functional group that reacts with the cyclic ether group; and patterning the infrared cut filter using dry etching.

[Chemical Formula 2]

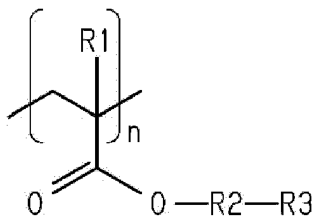

...... Formula (1)

In Formula (1), R1 is a hydrogen atom or a methyl group, and R2 is a single bond, a linear alkylene group having one or more carbon atoms, or a branched alkylene group having three or more carbon atoms. R3 is a cyclic ether group having an oxygen atom and two or more carbon atoms.

In another aspect, a solid-state image sensor filter is provided. The solid-state image sensor filter includes: the infrared cut filter described above; and a barrier layer that covers the infrared cut filter and suppresses transmission of an oxidation source that oxidizes the infrared cut filter.

In another aspect, a solid-state image sensor is provided. The solid-state image sensor includes: a photoelectric conversion device; and the solid-state image sensor filter described above.

[Brief Description of the Drawings]

Fig. 1 is an exploded perspective view showing the structure of a solid-state image sensor according to an embodiment.

[Description of the Embodiments]

An embodiment of an infrared cut filter, a solid-state image sensor filter, a solid-state image sensor, and a method of producing the solid-state image sensor filter will be described with reference to Fig. 1. In the following, the solid-state image sensor, the method of producing the solid-state image sensor filter, and Examples will be described

in order. In this embodiment, the infrared light is light with a wavelength of 0.7 μm or higher and 1 mm or lower, that is, 700 nm or higher and $1 \times 10^6$ nm or lower. Near-infrared light is part of infrared light that has wavelengths in the range of 700 nm or higher and 1100 nm or lower.

[Solid-State Image Sensor]

The solid-state image sensor will be described with reference to Fig. 1. Fig. 1 is a schematic configuration diagram showing each layer of a part of the solid-state image sensor separately.

As shown in Fig. 1, the solid-state image sensor 10 includes a solid-state image sensor filter 10F and a plurality of photoelectric conversion devices 11. The plurality of photoelectric conversion devices 11 include a red photoelectric conversion device 11R, a green photoelectric conversion device 11G, a blue photoelectric conversion device 11B, and an infrared photoelectric conversion device 11P. Each of the photoelectric conversion devices 11R, 11G, and 11B for the corresponding colors measures the intensity of visible light having specific wavelengths associated with that photoelectric conversion device 11R, 11G, and 11B. The infrared photoelectric conversion device 11P measures the intensity of infrared light.

The solid-state image sensor 10 includes a plurality of red photoelectric conversion devices 11R, a plurality of green photoelectric conversion devices 11G, a plurality of blue photoelectric conversion devices 11B, and a plurality of infrared photoelectric conversion devices 11P. For convenience of illustration, Fig. 1 shows a repeating unit of the photoelectric conversion devices 11 of the solid-state image sensor 10.

The solid-state image sensor filter 10F includes a plurality of visible light filters, an infrared pass filter 12P, an infrared cut filter 13, a plurality of visible light microlenses, and an infrared microlens 15P.

The visible light color filters include a red filter 12R, a green filter 12G, and a blue filter 12B. The red filter 12R is located on the side of the red photoelectric conversion device 11R where light enters. The green filter 12G is located on the side of the green photoelectric conversion device 11G where light enters. The blue filter 12B is located on the side of the blue photoelectric conversion device 11B where light enters.

The infrared pass filter 12P is located on the side of the infrared photoelectric conversion device 11P where light enters. The infrared pass filter 12P cuts out the visible light which may be detected by the infrared photoelectric conversion device 11P for the infrared photoelectric conversion device 11P. In other words, the infrared pass filter 12P prevents the visible light which may be detected by the infrared photoelectric conversion device 11P from passing through toward the infrared photoelectric conversion device 11P. This improves the accuracy of infrared light detection using the infrared photoelectric conversion device 11P. The infrared light that may be detected by the infrared photoelectric conversion device 11P is, for example, near-infrared light.

The infrared cut filter 13 is located on the side of the color filters 12R, 12G, and 12B where light enters. The infrared cut filter 13 has a through hole 13H. The infrared pass filter 12P is located in the area defined by the through hole 13H when viewed from a viewpoint facing the plane in which the infrared cut filter 13 extends. The infrared cut filter 13 is located on the red, green, and blue filters 12R, 12G, and 12B when viewed from a viewpoint facing the plane in which the infrared cut filter 13 extends.

The infrared cut filter 13 contains a cyanine dye that is an infrared absorbing dye. A cyanine dye has a maximum absorbance to infrared light at a wavelength within the wavelength range of near-infrared light. Therefore, the infrared cut filter 13 can reliably absorb near-infrared light that passes through the infrared cut filter 13. As a result, near-infrared light that may be detected by the photoelectric conversion devices 11 for each color is sufficiently cut off by the infrared cut filter 13. For example, the infrared cut filter 13 can have a thickness of 300 nm or more and 3 μm or less.

A barrier layer 14 prevents an oxidation source that may oxidize the infrared cut filter 13 from passing through toward the infrared cut filter 13. The oxidation source is, for example, oxygen or water. The oxygen permeability of the barrier layer 14 is preferably, for example, 5.0 $cc/m^2/day/atm$ or lower. The oxygen permeability value is based on JIS K 7126:2006. Since the oxygen permeability is set at 5.0 $cc/m^2/day/atm$ or lower, the barrier layer 14 prevents the oxidation source from reaching the infrared cut filter 13 so as to protect the infrared cut filter 13 from being oxidized by the oxidation source. Therefore, the infrared cut filter 13 can have improved light resistance.

The material forming the barrier layer 14 is an inorganic compound. The material forming the barrier layer 14 is preferably a silicon compound. The material forming the barrier layer 14 may be, for example, at least one selected from the group consisting of silicon nitride, silicon oxide, and silicon oxynitride.

The plurality of microlenses include a red microlens 15R, a green microlens 15G, a blue microlens 15B, and an infrared microlens 15P. The red microlens 15R is located on the side of the red filter 12R where light enters. The green microlens 15G is located on the side of the green filter 12G where light enters. The blue microlens 15B is located on the side of the blue filter 12B where light enters. The infrared microlens 15P is located on the side of the infrared pass filter 12P where light enters.

The microlenses 15R, 15G, 15B, and 15P each have a light receiving surface 15S, which is their outer surface. The microlenses 15R, 15G, 15B, and 15P have a refractive index difference with respect to the external air surrounding

the microlenses, that is, the atmosphere, for converging the light inputted to the light receiving surface 15S toward the photoelectric conversion devices 11R, 11G, 11B, and 11P, respectively. The microlenses 15R, 15G, 15B, and 15P contain transparent resin.

[Infrared Cut Filter]

The infrared cut filter 13 will be described in more detail below.

The infrared cut filter 13 contains a cyanine dye and a copolymer. The cyanine dye includes a cation having a polymethine and a nitrogen-containing heterocycle at each end of the polymethine, and a tris(pentafluoroethyl)trifluorophosphate (FAP) anion. The copolymer is represented by the following Formula (1) and includes a first repeating unit derived from an acrylic monomer (first monomer) having a cyclic ether group, and a second repeating unit derived from a monomer (second monomer) having a functional group that reacts with a cyclic ether.

[Chemical Formula 3]

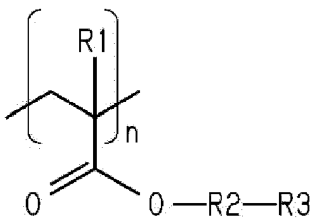

...... Formula (1)

In Formula (1), R1 is a hydrogen atom or a methyl group, and R2 is a single bond, a linear alkylene group having one or more carbon atoms, or a branched alkylene group having three or more carbon atoms. R3 is a cyclic ether group having an oxygen atom and two or more carbon atoms.

The cyanine dye may have a structure represented by Formula (4) below.

[Chemical Formula 4]

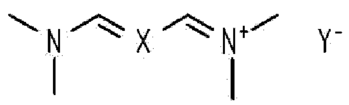

...... Formula (4)

In formula (4) above, X is one methine or polymethine. The hydrogen atom bonded to the carbon atom of the methine may be substituted with a halogen atom or an organic group. The polymethine may have a cyclic structure containing carbon atoms forming the polymethine. The cyclic structure can include three consecutive carbons among the carbon atoms forming the polymethine. When the polymethine has a cyclic structure, the polymethine may have 5 or more carbon atoms. Each nitrogen atom is included in a five- or six-membered heterocycle. The heterocycles may be fused. $Y^-$ is an anion.

The cyanine dye may have a structure represented by formula (5) below.

[Chemical Formula 5]

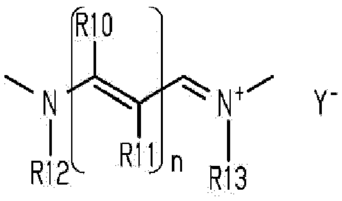

...... Formula (5)

In the above formula (5), n is 1 or a larger integer. n indicates the number of repeating units included in the polymethine chain. R10 and R11 are hydrogen atoms or organic groups. R12 and R13 are hydrogen atoms or organic groups. R12 and R13 are preferably linear alkyl groups each having one or more carbon atoms or branched alkyl groups. Each nitrogen atom is included in a five- or six-membered heterocycle. The heterocycles may be fused.

In Formula (4), when the polymethine includes a cyclic structure, the cyclic structure may have, for example, at least one unsaturated bond such as an ethylenic double bond, and the unsaturated bond may have electronic resonance as part of the polymethine chain. Such a cyclic structure may be, for example, a cyclopentene ring, cyclopentadiene ring, cyclohexene ring, cyclohexadiene ring, cycloheptene ring, cyclooctene ring, cyclooctadiene ring, or benzene ring. These cyclic structures may have a substituent.

The compound is a cyanine when n is 1 in Formula (5), the compound is a carbocyanine when n is 2, and the compound is a dicarbocyanine when n is 3. The compound is a tricarbocyanine when n is 4 in Formula (5).

The organic groups for R10 and R11 may include, for example, alkyl groups, aryl groups, aralkyl groups, and alkenyl groups. The alkyl group may be, for example, a methyl group, ethyl group, propyl group, isopropyl group, n-butyl group, sec-butyl group, isobutyl group, tert-butyl group, isopentyl group, neopentyl group, hexyl group, cyclohexyl group, octyl group, nonyl group, or decyl group. The aryl group may be, for example, a phenyl, tolyl, xylyl, or naphthyl group. The aralkyl group may be, for example, a benzyl, phenylethyl, or phenylpropyl group. The alkenyl group may be, for example, a vinyl group, allyl group, propenyl group, isopropenyl group, butenyl group, hexenyl group, cyclohexenyl group, or octenyl group.

At least part of the hydrogen atoms of an organic group may be substituted with a halogen atom or a cyano group. The halogen atom may be fluorine, bromine, or chlorine. The organic group after substitution may be, for example, a chloromethyl group, chloropropyl group, bromoethyl group, trifluoropropyl group, or cyanoethyl group.

R12 or R13 may be, for example, a methyl group, ethyl group, propyl group, isopropyl group, n-butyl group, sec-butyl group, isobutyl group, tert-butyl group, isopentyl group, neopentyl group, hexyl group, cyclohexyl group, octyl group, nonyl group, or decyl group.

The heterocycles each having a nitrogen atom may be, for example, pyrrole, imidazole, thiazole, or pyridine.

The cations in such a cyanine dye may have, for example, the structure represented by the following Formula (6) or (7).

[Chemical Formula 6]

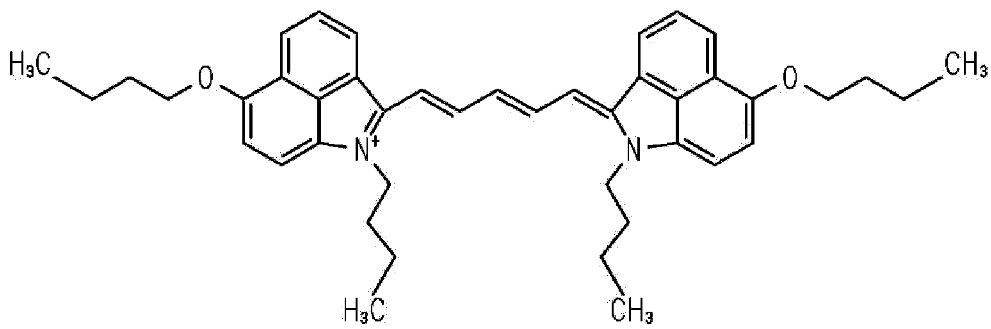

...... Formula (6)

[Chemical Formula 7]

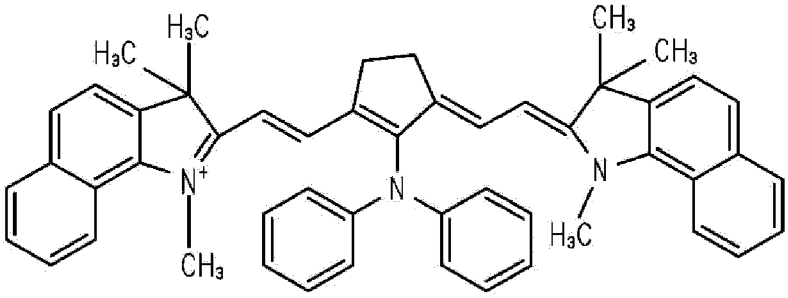

...... Formula (7)

The cations in such a cyanine dye may have, for example, the structure represented by the following Formulas (8) to (47). That is, the nitrogen atoms in the cyanine dye may be included in the cyclic structures shown below.

[Chemical Formula 8]

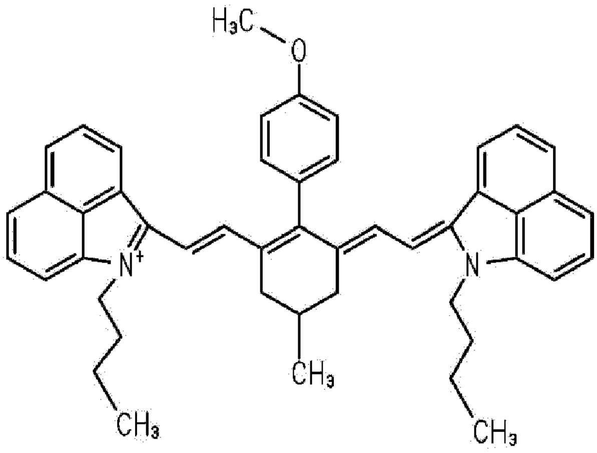

...... Formula (8)

[Chemical Formula 9]

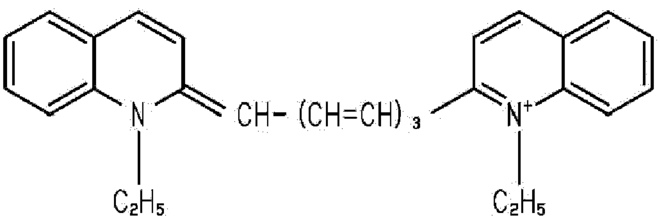

...... Formula (9)

[Chemical Formula 10]

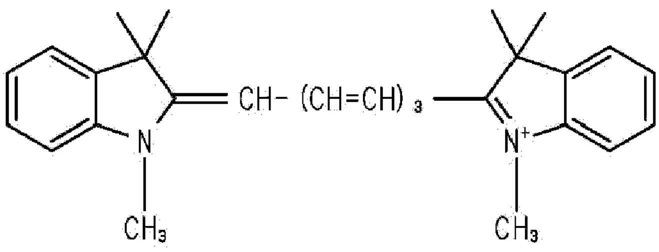

...... Formula (10)

[Chemical Formula 11]

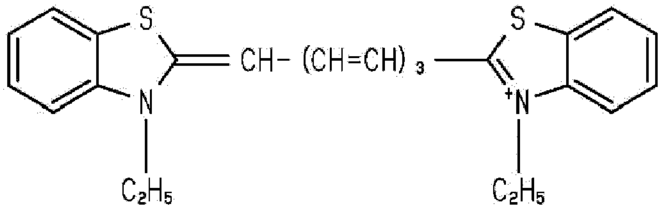

...... Formula (11)

[Chemical Formula 12]

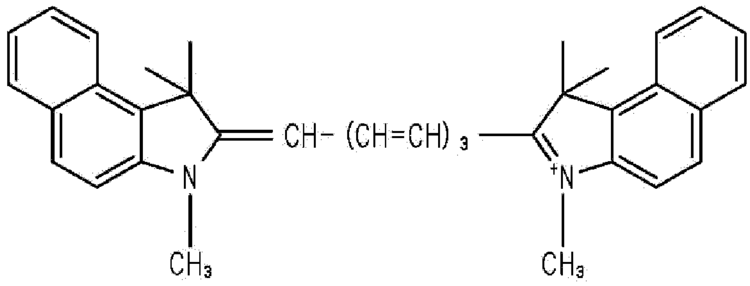

...... Formula (12)

[Chemical Formula 13]

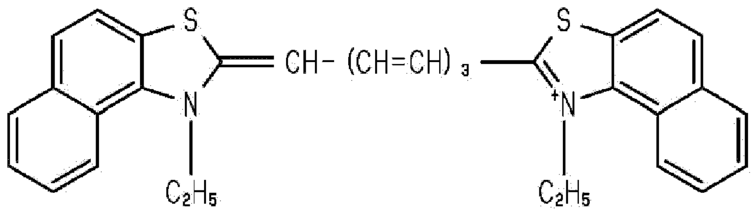

...... Formula (13)

[Chemical Formula 14]

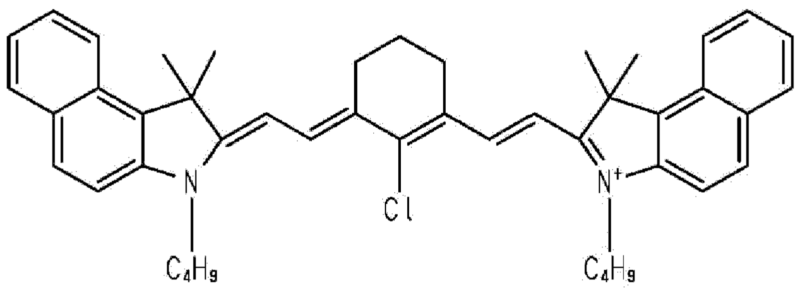

...... Formula (14)

[Chemical Formula 15]

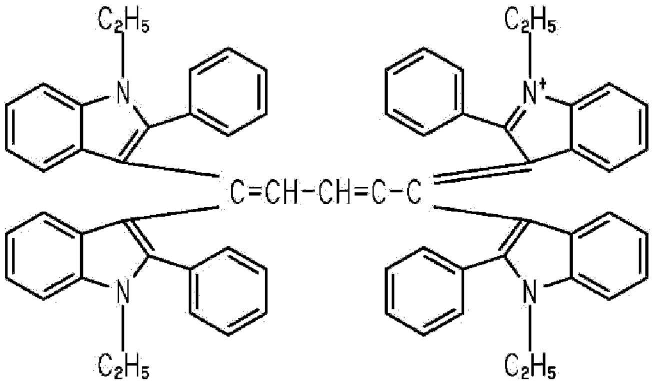

...... Formula (15)

[Chemical Formula 16]

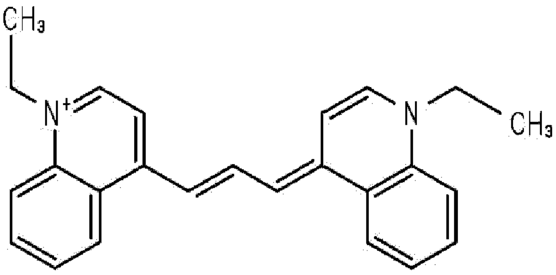

...... Formula (16)

[Chemical Formula 17]

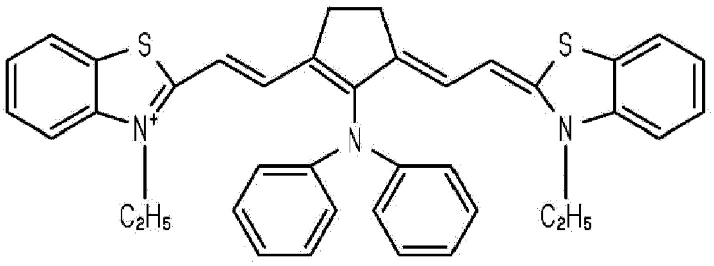

...... Formula (17)

[Chemical Formula 18]

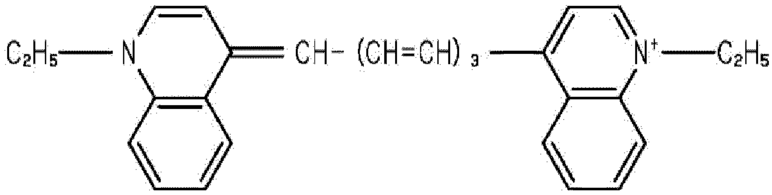

...... Formula (18)

[Chemical Formula 19]

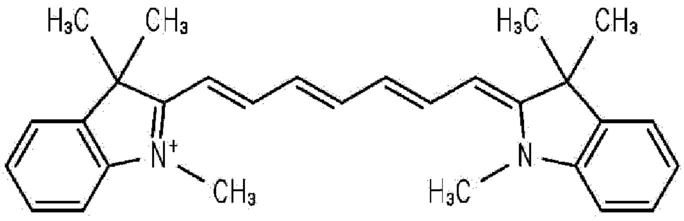

...... Formula (19)

[Chemical Formula 20]

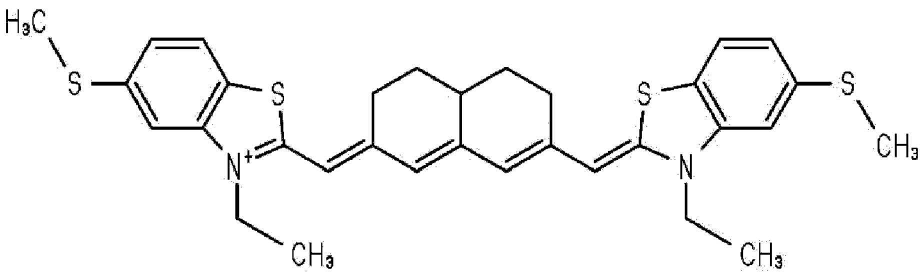

...... Formula (20)

[Chemical Formula 21]

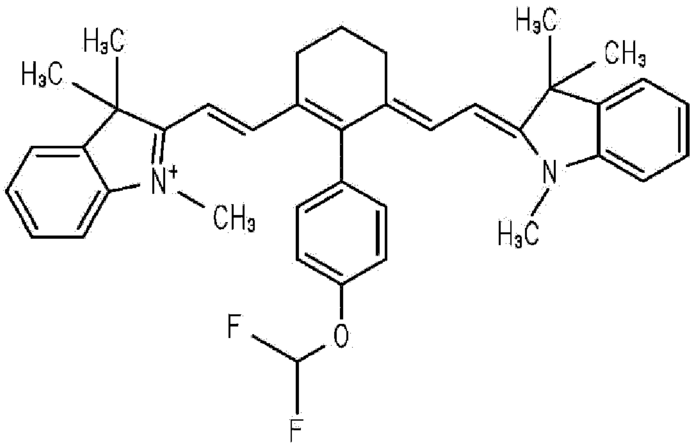

...... Formula (21)

[Chemical Formula 22]

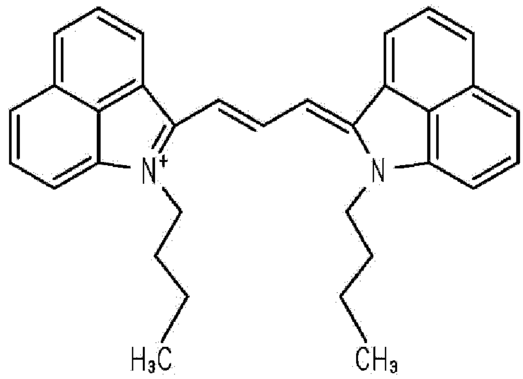

...... Formula (22)

[Chemical Formula 23]

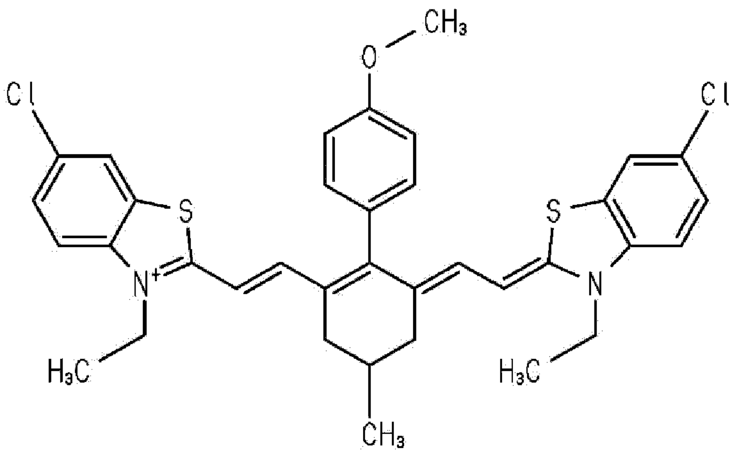

...... Formula (23)

[Chemical Formula 24]

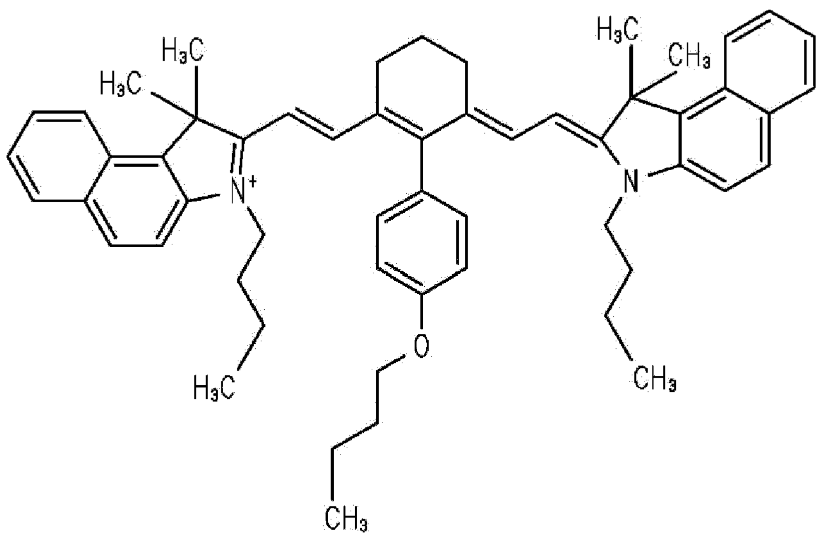

...... Formula (24)

[Chemical Formula 25]

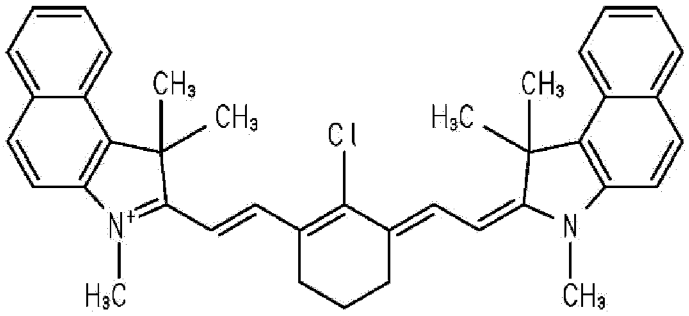

...... Formula (25)

[Chemical Formula 26]

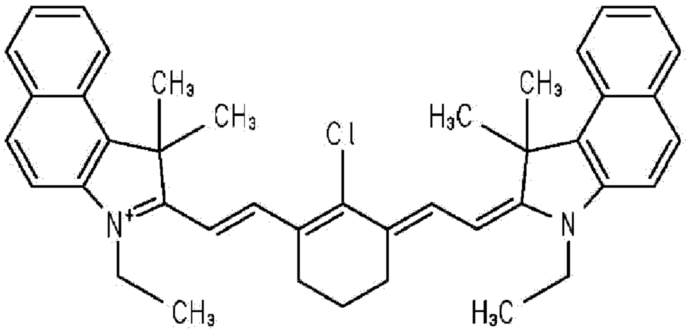

...... Formula (26)

[Chemical Formula 27]

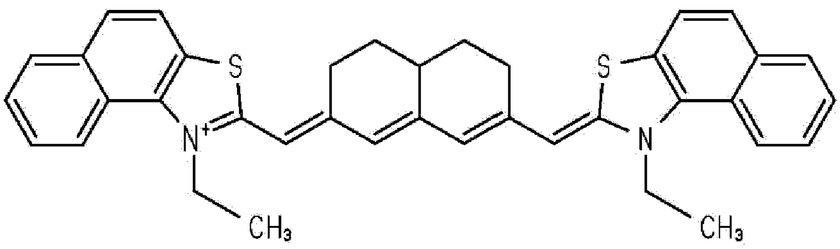

...... Formula (27)

[Chemical Formula 28]

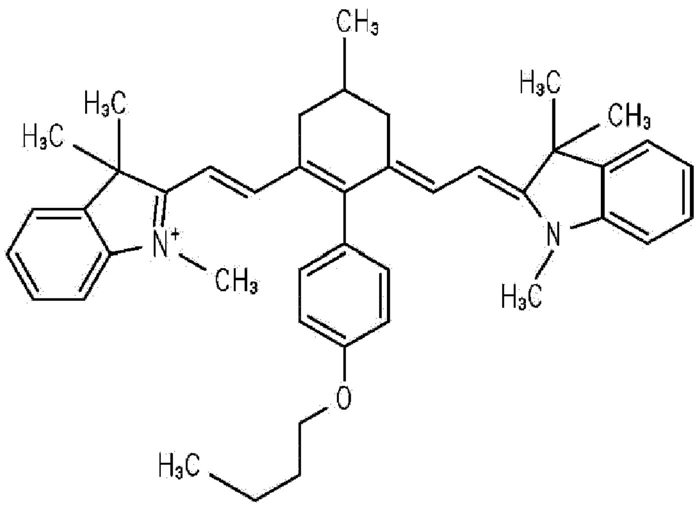

...... Formula (28)

[Chemical Formula 29]

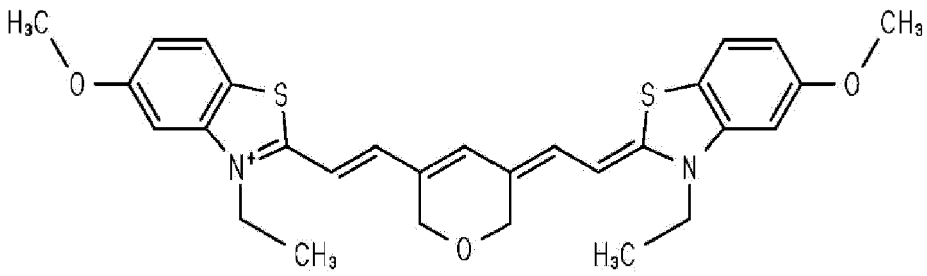

...... Formula (29)

[Chemical Formula 30]

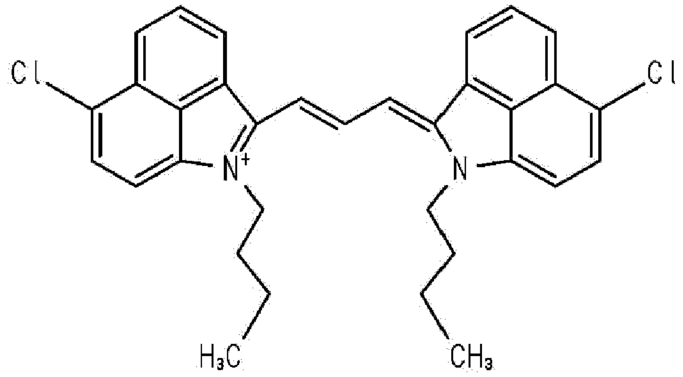

...... Formula (30)

[Chemical Formula 31]

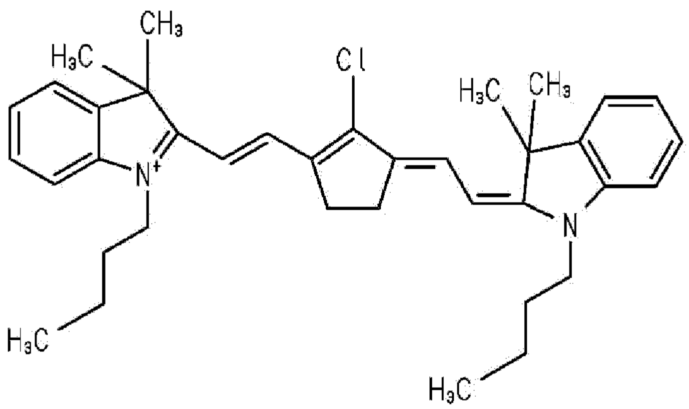

...... Formula (31)

[Chemical Formula 32]

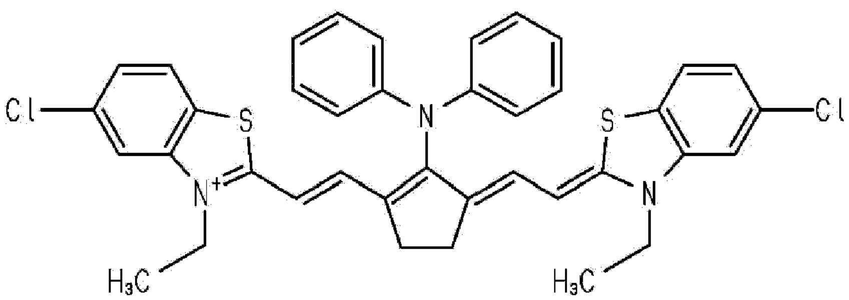

...... Formula (32)

[Chemical Formula 33]

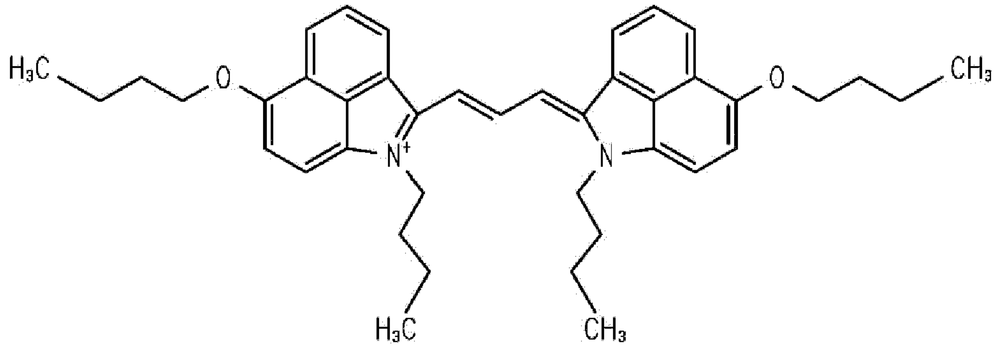

...... Formula (33)

[Chemical Formula 34]

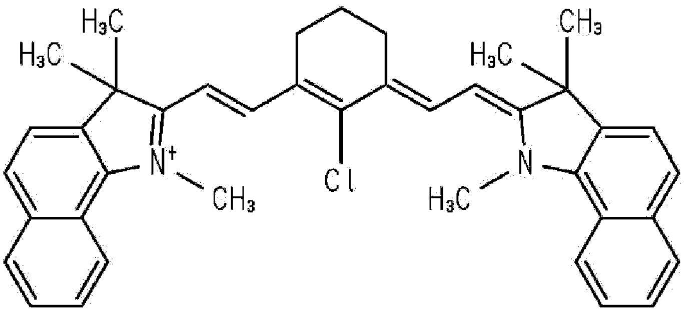

...... Formula (34)

[Chemical Formula 35]

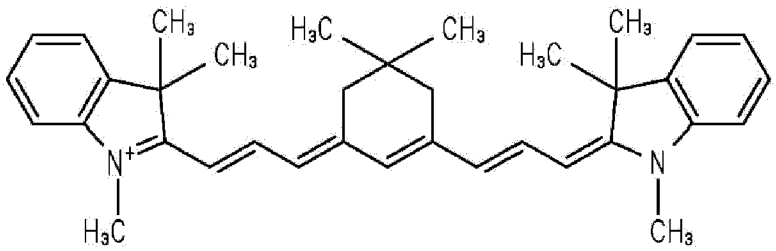

...... Formula (35)

[Chemical Formula 36]

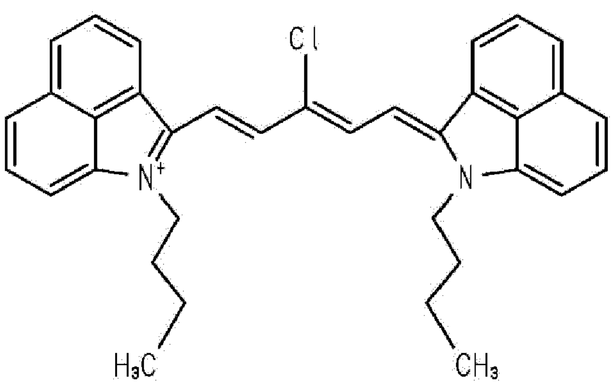

...... Formula (36)

[Chemical Formula 37]

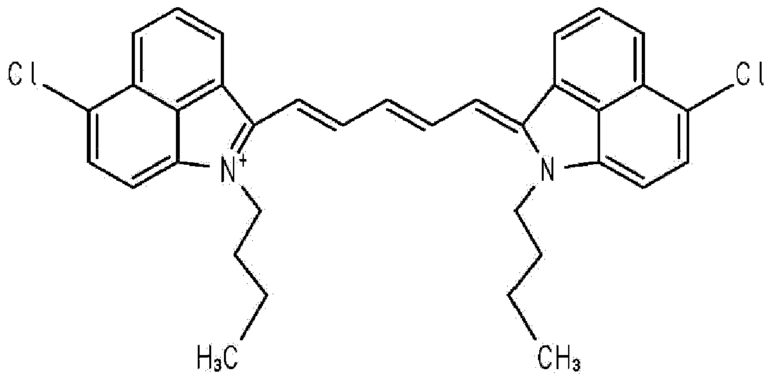

...... Formula (37)

[Chemical Formula 38]

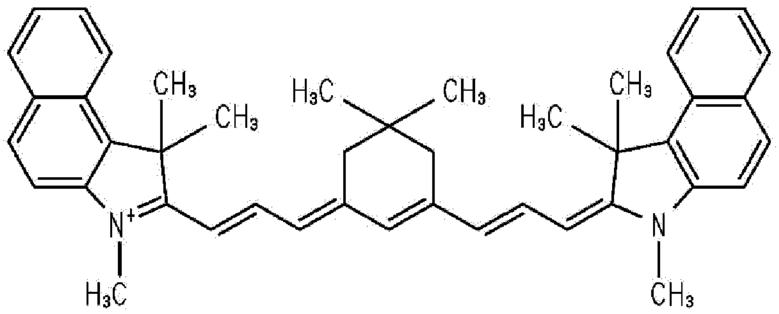

...... Formula (38)

[Chemical Formula 39]

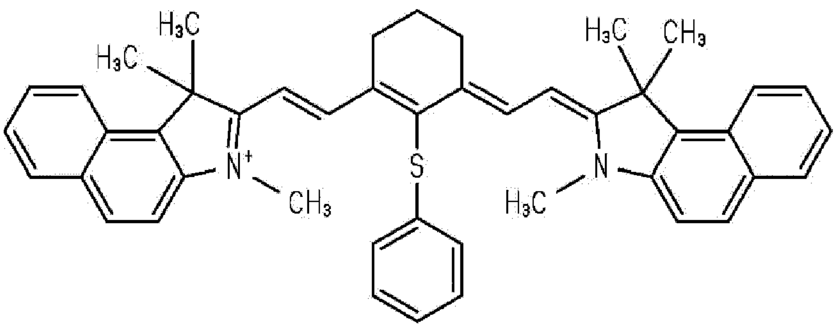

...... Formula (39)

[Chemical Formula 40]

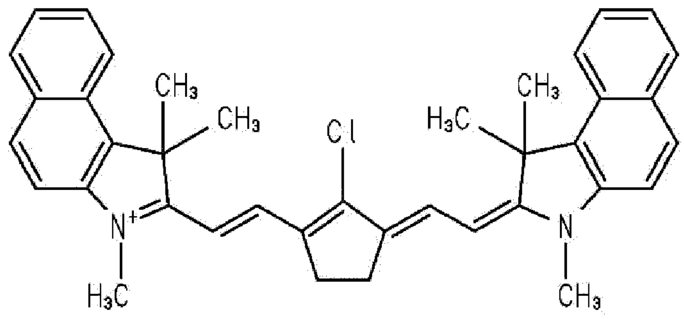

...... Formula (40)

[Chemical Formula 41]

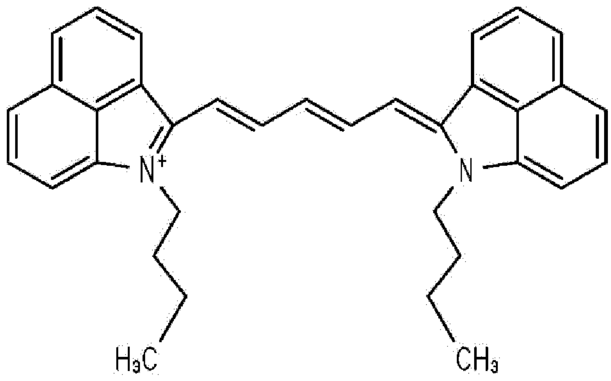

...... Formula (41)

[Chemical Formula 42]

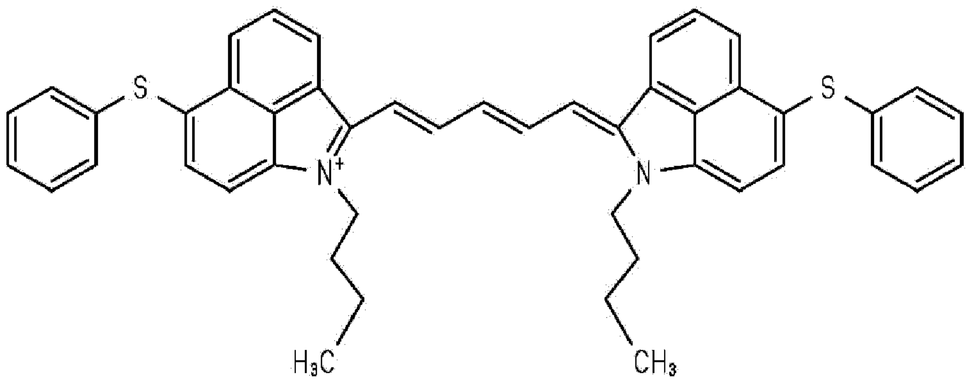

...... Formula (42)

[Chemical Formula 43]

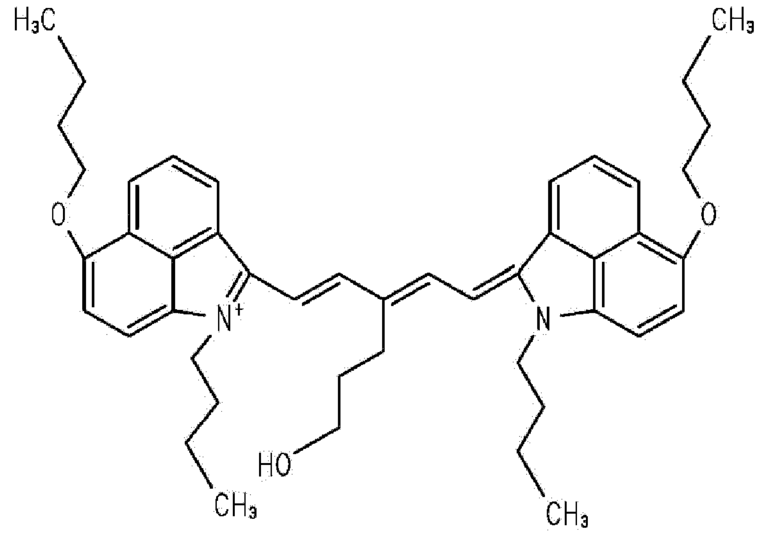

...... Formula (43)

[Chemical Formula 44]

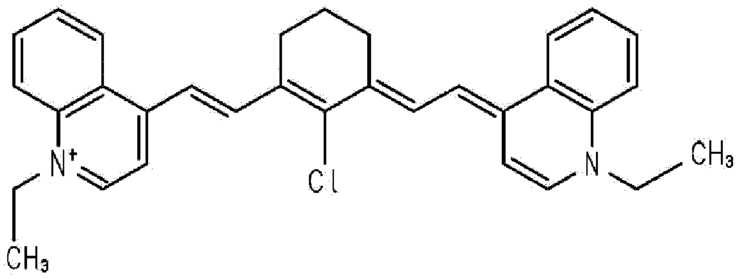

...... Formula (44)

[Chemical Formula 45]

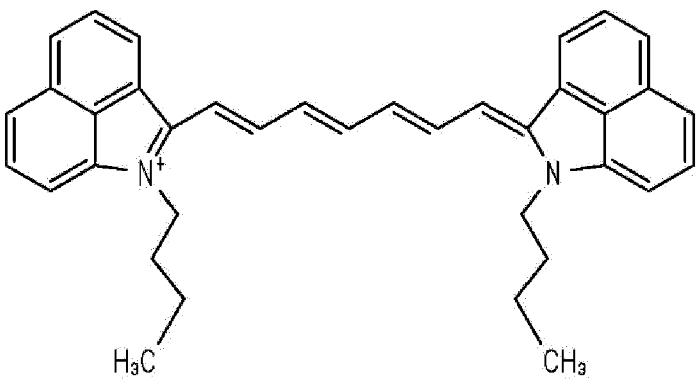

...... Formula (45)

[Chemical Formula 46]

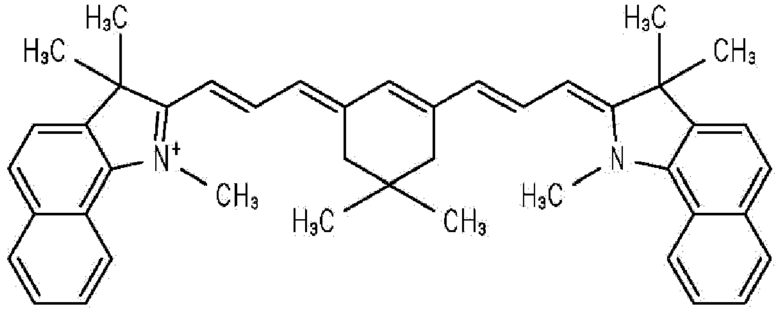

...... Formula (46)

[Chemical Formula 47]

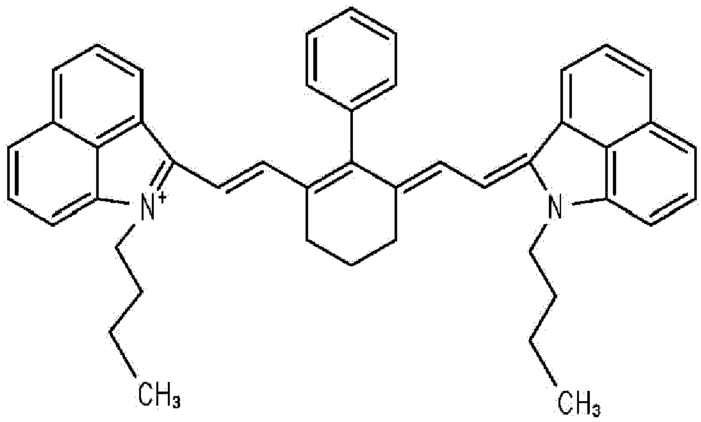

...... Formula (47)

The cyanine dye absorbs infrared light the most at a wavelength within the wavelength range of 700 nm or more and 1100 nm or less. Therefore, the infrared cut filter 13 can reliably absorb near-infrared light that passes through the infrared cut filter 13. As a result, near-infrared light that may be detected by the photoelectric conversion devices 11 for each color is sufficiently cut off by the infrared cut filter 13.

The absorbance Aλ at a certain wavelength λ is calculated using the following equation.

$$A\lambda = -\log_{10}(\%T/100)$$

The transmittance T is expressed by the ratio (TL/IL) of the intensity of the transmitted light (TL) to the intensity of the incident light (IL) when infrared light is transmitted through the infrared cut filter 13 having a cyanine dye. A transmittance T of the infrared cut filter 13 is the intensity of the transmitted light when the intensity of the incident light is 1, and the transmittance percentage %T is obtained by multiplying the transmittance T by 100.

Tris(pentafluoroethyl)trifluorophosphate anion ($[(C_2F_5)_3PF_3]^-$) has a structure represented by the following Formula (48).

[Chemical Formula 48]

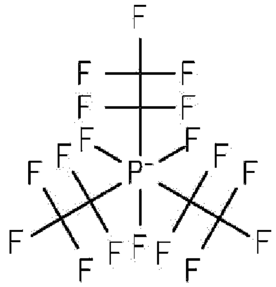

...... Formula (48)

In the production process of the solid-state image sensor 10, the infrared cut filter 13 is heated to about 200°C. When the cyanine dye described above is heated to about 200°C, the structure of the cyanine dye changes, which may change the infrared transmittance of the cyanine dye.

Since a FAP anion has a molecular weight and molecular structure that allows it to be located near the polymethine chain of the cyanine dye, it is possible to prevent the polymethine chain of the cyanine dye from being cut due to the cyanine dye being heated. Therefore, a change in the infrared transmittance of the cyanine dye due to the heating of the cyanine dye is suppressed, and as a result, a change in the infrared transmittance of the infrared cut filter 13 can be suppressed.

As described above, the infrared cut filter 13 contains a copolymer. The copolymer may include a repeating unit derived from a monomer including acrylic acid or methacrylic acid. A monomer including acrylic acid is an acrylate and a monomer including methacrylic acid is a methacrylate.

The copolymer includes first and second repeating units. The first repeating unit is derived from an acrylic monomer having a cyclic ether group. The second repeating unit is preferably derived from a monomer having a functional group that reacts with a cyclic ether group.

As described above, the first repeating unit is derived from an acrylic monomer having a cyclic ether group. In the first repeating unit, R1 is a hydrogen atom or a methyl group, and R2 is a single bond, a linear alkylene group having one or more carbon atoms, or a branched alkylene group having three or more carbon atoms. R2 may be, for example, a methylene group, an ethylene group, a trimethylene group, a propylene group, or a butylene group. R3 is a cyclic ether group having an oxygen atom and two or more carbon atoms. The cyclic ether group has an ether bond in a ring including a plurality of carbon atoms.

The cyclic ether group may be, for example, an epoxy group, oxetanyl group, tetrahydrofuranyl group, or tetrahydropyranyl group. Considering the reactivity with the functional group of the second repeating unit, the cyclic ether group is preferably an epoxy group or an oxetanyl group. That is, the monomer having a cyclic ether group preferably includes at least one of an epoxy group and an oxetanyl group.

The acrylic monomer having a cyclic ether group may be, for example, glycidyl (meth)acrylate, 2-methylglycidyl (meth)acrylate, 2-ethylglycidyl (meth)acrylate, 2-oxiranylethyl (meth)acrylate, 2-glycidyloxy ethyl (meth)acrylate, 3-glycidyloxypropyl (meth)acrylate, glycidyloxyphenyl (meth)acrylate, oxetanyl (meth)acrylate, 3-methyl-3-oxetanyl (meth)acrylate, 3-ethyl-3-oxetanyl (meth)acrylate, (3-methyl-3-oxetanyl)methyl (meth)acrylate, (3-ethyl-3-oxetanyl)methyl (meth)acrylate, 2-(3-methyl-3-oxetanyl)ethyl (meth)acrylate, 2-(3-ethyl-3-oxetanyl)ethyl (meth)acrylate, 2-[(3-methyl-3-oxetanyl)methyloxy]ethyl (meth)acrylate, 2-[(3-ethyl-3-oxetanyl)methyloxy] ethyl (meth)acrylate, 3-[(3-methyl-3-oxetanyl)methyloxy]propyl (meth)acrylate, 3-[(3-ethyl-3-oxetanyl)methyloxy]propyl (meth)acrylate, or tetrahydrofurfuryl (meth)acrylate.

The second repeating unit is derived from a monomer having a functional group that reacts with a cyclic ether group. Examples of functional groups that react with a cyclic ether group are a hydroxyl group, phenolic hydroxyl group, organic acid, acid anhydride, and amino group. These functional groups are likely to react with the cyclic ether group, and by the functional group forming a crosslinked structure with the cyclic ether group, the heat resistance and resistance to the stripping liquid of the infrared cut filter are enhanced. In particular, the functional group is preferably an acidic functional group in order to improve its reactivity with the cyclic ether group. That is, the monomer having a functional group that reacts with a cyclic ether group is preferably acidic.

Among the acidic functional groups, the functional group that reacts with the cyclic ether group is particularly preferably a phenolic hydroxyl group. Since the phenolic hydroxyl group is weakly acidic, crosslinking with the cyclic ether group is unlikely to occur during the resin polymerization process, that is, the copolymer polymerization process, but easily occurs during the heating process performed to prepare a coating film. Therefore, the phenolic hydroxyl group is advantageous in terms of ease of coating.

The monomer having a phenolic hydroxyl group may be, for example, 4-hydroxyphenyl (meth)acrylate, N-(4-hydroxyphenyl) (meth)acrylamide, 3-(tert-butyl)-4-hydroxyphenyl (meth)acrylate, 4-(tert-butyl)-2-hydroxyphenyl (meth)acrylate, N-(4-hydroxyphenyl)maleimide, N-(3-hydroxyphenyl)maleimide, p-hydroxystyrene, or α-methyl-p-hydroxystyrene. A polymer produced using the monomer having a phenolic hydroxyl group has a phenolic hydroxyl group in its side chain.

The copolymer may further include a third repeating unit. The third repeating unit is preferably derived from an acrylic monomer having an aromatic ring or an acrylic monomer having an alicyclic structure. The third repeating unit derived from an acrylic monomer having an aromatic ring is represented by the following Formula (2). The third repeating unit derived from an acrylic monomer having an alicyclic structure is represented by the following Formula (3).

[Chemical Formula 49]

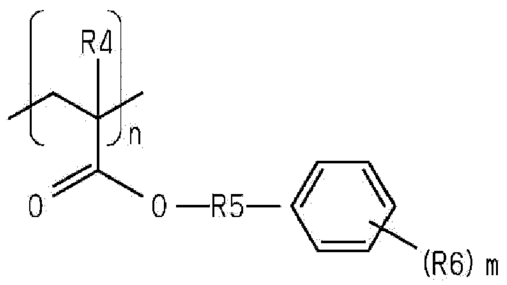

...... Formula (2)

In Formula (2), R4 is a hydrogen atom or a methyl group, and R5 is a single bond, a linear alkylene group having one or more carbon atoms, or a branched alkylene group having three or more carbon atoms. R6 is a hydrogen atom or a predetermined substituent. In Formula (2), m is an integer of 1 to 5 when R6 is a substituent.

[Chemical Formula 50]

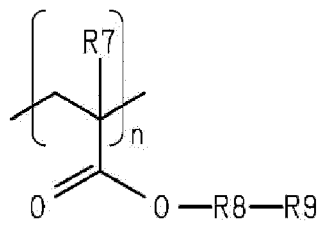

...... Formula (3)

In Formula (3), R7 is a hydrogen atom or a methyl group, and R8 is a single bond, a linear alkylene group having one or more carbon atoms, or a branched alkylene group having three or more carbon atoms. In Formula (3), R9 is an alicyclic structure having 3 or more carbon atoms.

The acrylic monomer having an aromatic ring may be, for example, benzyl (meth)acrylate, phenyl (meth)acrylate, phenoxyethyl (meth)acrylate, phenoxypolyethylene glycol (meth)acrylate, nonylphenoxypolyethyleneglycol (meth)acrylate, phenoxypolypropylene glycol (meth)acrylate, 2-(meth)acryloyloxyethyl-2-hydroxypropyl phthalate, 2-hydroxy-3-phenoxypropyl (meth)acrylate, 2-(meth)acryloyloxyethyl hydrogen phthalate, 2-(meth)acryloyloxy propyl hydrogen phthalate, ethoxylated ortho-phenylphenol (meth)acrylate, o-phenylphenoxyethyl (meth)acrylate, 3-phenoxybenzyl (meth)acrylate, 4-hydroxyphenyl (meth)acrylate, 2-naphthol (meth)acrylate, 4-biphenyl (meth)acrylate, 9-anthrylmethyl (meth)acrylate, 2-[3-(2H-benzotriazol-2-yl)-4-hydroxyphenyl]ethyl (meth)acrylate, phenol ethylene oxide (EO) modified acrylate, nonylphenol EO modified acrylate, 2-(meth)acryloyloxyethyl phthalate, or 2-(meth)acryloyloxyethyl hexahydrophthalate.

Examples of acrylic monomers having an alicyclic structure include, for example, cyclopentyl (meth)acrylate, cyclohexyl (meth)acrylate, 4-t-cyclohexyl (meth)acrylate, isobornyl (meth)acrylate, dicyclopentanyl (meth)acrylate, dicyclopentenyl (meth)acrylate, adamantyl (meth)acrylate, norbornyl (meth)acrylate, tricyclodecanyl (meth)acrylate, dicyclopentadienyl (meth)acrylate, and tetracyclododecyl (meth)acrylate.

The copolymer forming the infrared cut filter 13 includes the first and second repeating unis. Therefore, the cyclic ether group of the first repeating unit, and the functional group that reacts with the cyclic ether group of the second repeating unit form a crosslinked structure in the heating step performed to form a filter. This suppresses change in the

transmittance of the infrared cut filter caused by the heating, and prevents the cyanine dye from eluting into the stripping liquid used for dry etching. As a result, it is possible to improve the heat resistance and the resistance to the stripping liquid of the infrared cut filter.

The copolymer forming the infrared cut filter 13 further includes the third repeating unit. The aromatic ring or alicyclic structure in the third repeating unit can create a distance between cyanine dye molecules that is large enough to prevent association therebetween by placing itself between cyanine dye molecules that are close to each other. This suppresses deterioration of spectral characteristics at the wavelengths of light the cyanine dye is expected to absorb.

The copolymer preferably has the first repeating unit in a proportion of 7.5% by weight or higher and 17.5% by weight or lower, and the ratio of the second repeating unit to the first repeating unit is 1.0% by weight or higher and 3.0% by weight or lower. When the proportions of the first and second repeating units in the copolymer are within the above ranges, it is possible to suppress a decrease in the infrared absorbance of the infrared cut filter after heat treatment and stripping liquid treatment.

The proportion of the third repeating unit in the copolymer is preferably 65% by weight or higher. When the proportion of the third repeating unit in the copolymer is within the above range, it is possible to prevent association between cyanine dye molecules in the infrared cut filter, and prevent the spectral characteristics from deteriorating at the wavelengths of the light the cyanine dye is expected to absorb.

The copolymer preferably has a first repeating unit derived from glycidyl methacrylate, a second repeating unit derived from 4-hydroxyphenyl methacrylate, and a third repeating unit derived from phenyl methacrylate. In this case, the copolymer preferably has the third repeating unit in a proportion of 65% by weight or higher and 70% by weight or lower, and the ratio of the second repeating unit to the first repeating unit is 1.0% by weight or higher and 3.0% by weight or lower. This allows the phenyl group in the third repeating unit to create a distance between cyanine dye molecules that is large enough to prevent association therebetween by placing itself between cyanine dye molecules that are close to each other. This suppresses change in spectral characteristics at the wavelengths of the light the cyanine dye is expected to absorb. A crosslinked structure is formed by crosslinking the phenol group of the second repeating unit with the epoxy group of the first repeating unit. This suppresses the change in the transmittance of the infrared cut filter 13 caused by heating, and prevents the infrared absorbing dye from eluting into the stripping liquid used for dry etching. As a result, it is possible to improve the heat resistance and the resistance to the stripping liquid of the infrared cut filter 13.

The proportion of the first repeating unit in the copolymer is preferably 7.5% by weight or higher and 17.5% or lower by weight. When the proportion of the first repeating unit in the copolymer is in this range, it is possible to suppress a decrease in the infrared absorbance of the infrared cut filter 13 after heat treatment and stripping liquid treatment.

Further, the proportion of the second repeating unit in the copolymer is preferably 15% by weight or higher and 25% or lower by weight. When the proportion of the second repeating unit in the copolymer is within this range, it is possible to suppress a decrease in the infrared absorbance of the infrared cut filter 13 after heat treatment and stripping liquid treatment.

The copolymer may include a monomer other than the above-described acrylic monomers. Examples of monomers that may be included other than the acrylic monomers described above include styrene monomers, (meth)acrylic monomers, vinyl ester monomers, vinyl ether monomers, halogen element-containing vinyl monomers, and diene monomers. Examples of styrene monomers include styrene, $\alpha$-methylstyrene, p-methylstyrene, m-methylstyrene, p-methoxystyrene, p-hydroxystyrene, p-acetoxystyrene, vinyltoluene, ethylstyrene, phenylstyrene, and benzyl styrene. Examples of (meth)acrylic monomers include methyl acrylate, ethyl acrylate, butyl acrylate, 2-ethylhexyl acrylate, methyl methacrylate, ethyl methacrylate, butyl methacrylate, and 2-ethylhexyl methacrylate. The vinyl ester monomer may be, for example, vinyl acetate. The vinyl ether-based monomer may be, for example, vinyl methyl ether. The halogen element-containing vinyl monomer may be, for example, vinyl chloride. The diene monomer may be, for example, butadiene or isobutylene. The copolymer may contain only one monomer other than the above-mentioned acrylic monomer, or may contain two or more monomers.

The copolymer may include a monomer for adjusting the polarity of the copolymer. A monomer for adjusting the polarity adds an acid group or a hydroxyl group to the copolymer. Examples of such monomers include acrylic acid, methacrylic acid, maleic anhydride, maleate half ester, 2-hydroxyethyl acrylate, and 4-hydroxyphenyl (meth)acrylate.

The copolymer may have the structure of a random copolymer, alternating copolymer, block copolymer or graft copolymer. The production process and preparation with the cyanine dye are easy when the copolymer has the structure of a random copolymer. Therefore, a random copolymer is preferred over other copolymers.

The polymerization method for obtaining the copolymer may be, for example, radical polymerization, cationic polymerization, anionic polymerization, living radical polymerization, living cationic polymerization, or living anionic polymerization. Radical polymerization is preferably selected as the polymerization method for obtaining the copolymer because it facilitates industrial production. The radical polymerization may be solution polymerization, emulsion polymerization, bulk polymerization, or suspension polymerization. The radical polymerization is preferably solution polymerization. By using solution polymerization, the molecular weight of the copolymer can be easily controlled. In addition, after the polymerization of the monomers, the solution containing the copolymer can be used in that solution state in the

production of the solid-state image sensor filter.

In the radical polymerization, before adding a radical polymerization initiator to polymerize the monomers, the monomers may be diluted with a polymerization solvent.

The polymerization solvent may be, for example, an ester solvent, alcohol ether solvent, ketone solvent, aromatic solvent, amide solvent, or alcohol solvent. The ester solvent may be, for example, methyl acetate, ethyl acetate, n-butyl acetate, isobutyl acetate, t-butyl acetate, methyl lactate, ethyl lactate, or propylene glycol monomethyl ether acetate. The alcohol ether solvent may be, for example, ethylene glycol monomethyl ether, ethylene glycol monoethyl ether, propylene glycol monomethyl ether, propylene glycol monoethyl ether, 3-methoxy-1-butanol, or 3-methoxy-3-methyl-1-butanol. The ketone solvent may be, for example, acetone, methyl ethyl ketone, methyl isobutyl ketone, or cyclohexanone. The aromatic solvent may be, for example, benzene, toluene, or xylene. The amide solvent may be, for example, formamide or dimethylformamide. The alcohol solvent may be, for example, methanol, ethanol, n-propanol, isopropanol, n-butanol, isobutanol, s-butanol, t-butanol, diacetone alcohol, or 2-methyl-2-butanol. Among these examples, ketone solvents and ester solvents are preferable because they can be used to produce solid-state image sensors. One of the polymerization solvents described above may be used alone or two or more may be mixed together.

The amount of the polymerization initiator is not particularly limited, but preferably, when the total amount of monomers is set to 100 parts by weight, the amount of polymerization solution is 1 part by weight or higher and 1000 parts by weight or lower, and more preferably 10 parts by weight or higher and 500 parts by weight or lower.

The radical polymerization initiator may be, for example, a peroxide or an azo compound. The peroxides may be, for example, benzoyl peroxide, t-butyl peroxyacetate, t-butyl peroxybenzoate, or di-t-butyl peroxide. The azo compound may be, for example, azobisisobutyronitrile, an azobisamidinopropane salt, an azobiscyanovaleric acid (salt), or 2,2'-azobis[2-methyl-N-(2-hydroxyethyl) propionamide].

When the total amount of monomers is set to 100 parts by weight, the amount of the radical polymerization initiator used is preferably 0.0001 parts by weight or higher and 20 parts by weight or lower, more preferably 0.001 parts by weight or higher and 15 parts by weight or lower, and further preferably 0.005 parts by weight or higher and 10 parts by weight or lower. The radical polymerization initiator may be added to the monomers and the polymerization solvent before initiating polymerization, or may be added dropwise into the polymerization reaction system. Adding the radical polymerization initiator dropwise into the polymerization reaction system for the monomers and the polymerization solvent is preferable in that the heat generation caused by polymerization can be suppressed.

The reaction temperature for radical polymerization is selected as appropriate according to the kinds of radical polymerization initiator and polymerization solvent. The reaction temperature is preferably 60°C or higher and 110°C or lower in order to facilitate production and reaction control.

The glass transition temperature of the copolymer is preferably 75°C or higher, and more preferably 100°C or higher. When the glass transition temperature is 75°C or higher, it is possible to suppress the change in the infrared transmittance of the infrared cut filter more reliably when the infrared cut filter 13 is heated.

The molecular weight of the copolymer is preferably 30,000 or higher and 150,000 or lower, and more preferably 50,000 or higher and 150,000 or lower. When the molecular weight of the copolymer is within this range, it is possible to suppress the change in the infrared transmittance of the infrared cut filter more reliably when the infrared cut filter 13 is heated.

Since a copolymer having a molecular weight exceeding 150,000 increases the viscosity of the polymer solution containing the polymer obtained by polymerization, it is difficult to form a coating solution containing a copolymer having a molecular weight exceeding 150,000 and a cyanine dye. Therefore, when the molecular weight of the copolymer exceeds 150,000, the infrared cut filter 13 cannot be easily formed. On the other hand, when the molecular weight of the copolymer is 150,000 or lower, it is possible to form a coating solution containing the copolymer and a cyanine dye, and the infrared cut filter 13 can be formed more easily. Note that the average molecular weight of the copolymer is weight average molecular weight. The weight average molecular weight of the copolymer can be measured using, for example, gel permeation chromatography. For example, in a radical polymerization reaction, the molecular weight of the copolymer can be controlled by changing the concentrations of the monomers and radical polymerization initiator in the solution.

The percentage (MM/MS$\times$100) of the mass (MM) of the monomers with respect to the sum (MS) of the mass of the copolymer and the mass of the monomers constituting the copolymer is preferably 20% or lower. That is, in the solution that has been used to prepare the copolymer, the percentage (MM/MS) of the mass (MM) of the monomers with respect to the sum (MS) of the mass of the copolymer and the mass of the monomers is preferably 20% or lower. The infrared transmittance of the cyanine dye is less likely to change when the infrared cut filter 13 is heated compared with the case where the residual monomer content is higher than 20%.

The percentage (MM/MS$\times$100) of the mass (MM) of the monomers with respect to the sum (MS) of the mass of the copolymer and the mass of the monomers constituting the copolymer is more preferably 10% or lower, and even more preferably 3% or lower. The mass of the copolymer and the mass of the monomers can be quantified based on analytical results on the copolymer. The method of analyzing the copolymer may be, for example, gas chromatography-mass spectrometry (GC-MS), nuclear magnetic resonance spectroscopy (NMR), or infrared spectroscopy (IR).

The ratio of the mass of the monomers to the sum of the mass of the copolymer and the mass of the monomers may be changed by, for example, changing the polymerization time or the polymerization temperature. The ratio of the mass of the monomers to the sum of the mass of the copolymer and the mass of the monomers may also be changed by changing the concentrations of the monomers and the radical polymerization initiator at the start of the polymerization reaction. The ratio of the mass of the monomers to the sum of the mass of the copolymer and the mass of the monomers may be changed by changing the conditions of purification carried out after the polymerization reaction. Among these examples, changing the polymerization time is preferable because the change in the mass ratio of the monomers can be accurately controlled.

When the radical polymerization initiator used to polymerize the copolymer is an organic peroxide having an aromatic ring in the side chain, preferably, there is less than 0.35 parts by weight of organic peroxide per 100 parts by weight of the copolymer in the infrared cut filter. When there is less than 0.35 parts by weight of organic peroxide in the infrared cut filter, it is possible to suppress the deterioration of the spectral characteristics of the infrared cut filter in the visible light region as well as the infrared light region.

[Method of Producing Solid-State Image Sensor Filter]

The method of producing the solid-state image sensor filter 10F includes forming the infrared cut filter 13 and patterning of the infrared cut filter 13 by dry etching. In the formation of the infrared cut filter 13, an infrared cut filter 13 containing a cyanine dye and a copolymer is formed. The method of producing the solid-state image sensor filter 10F will be described in more detail below.

The color filters 12R, 12G, 12B, and 12P are formed by forming a coating film containing a coloring photosensitive resin and performing patterning of the coating film using photolithography. For example, a coating film containing a red photosensitive resin is formed by applying a coating solution containing the red photosensitive resin and drying the coating film formed by the application. The red filter 12R is formed by exposing and developing the coating film containing a red photosensitive resin in the area of the red filter 12R. The green filter 12G, the blue filter 12B, and the infrared pass filter 12P are also formed similarly to the red filter 12R.

One organic or inorganic pigment or a mixture of two or more organic or inorganic pigments can be contained in the colorant compositions of the red, green, and blue filters 12R, 12G, and 12B. The pigment is preferably a pigment that produces a color well and has high heat resistance, particularly a pigment having a high resistance to thermal decomposition, and is preferably an organic pigment. Examples of organic pigments include phthalocyanine pigments, azo pigments, anthraquinone pigments, quinacridone pigments, dioxazine pigments, anthanthrone pigments, indanthrone pigments, perylene pigments, thioindigo pigments, isoindoline pigments, quinophthalone pigments, and diketopyrrolopyrrole pigments.

A black dye or black pigment can be used as the colorant contained in the infrared pass filter 12P. The black dye may be a single dye that is black by itself or a black mixture of two or more dyes. Examples of black dyes include azo dyes, anthraquinone dyes, azine dyes, quinoline dyes, perinone dyes, perylene dyes, and methine dyes.

The photosensitive colorant compositions for each color may further contain components such as a binder resin, a photopolymerization initiator, a polymerizable monomer, an organic solvent, and a leveling agent.

When forming the infrared cut filter 13, a coating solution containing the above-described cyanine dye, copolymer, and organic solvent is applied onto the filters 12R, 12G, 12B, and 12P for each color and then dried. The dried coating film is then cured by heating. The infrared cut filter 13 is thus formed.

When forming the through hole 13H in the infrared cut filter 13, first, a photoresist layer is formed on the infrared cut filter 13. A resist pattern is formed by patterning this photoresist layer. Next, the infrared cut filter 13 is dry-etched using this resist pattern as an etching mask. The through hole 13H is formed by removing the resist pattern remaining on the infrared cut filter 13 with a stripping liquid after the etching. The infrared cut filter can thus be patterned.

The stripping liquid can be a liquid capable of dissolving the resist pattern. For example, the stripping liquid may be N-methylpyrrolidone or dimethylsulfoxide. The infrared cut filter 13 may be brought into contact with the stripping liquid using any suitable method such as dipping, spraying, or spinning.

The barrier layer 14 is formed by forming a film using a vapor-phase film formation method such as sputtering, CVD, or ion plating, or a liquid-phase film formation method such as coating. The barrier layer 14 made of silicon oxide is formed by, for example, forming a film over the substrate on which the infrared cut filter 13 is formed by sputtering using a silicon oxide target. The barrier layer 14 made of silicon oxide is formed by, for example, forming a film over the substrate on which the infrared cut filter 13 is formed by CVD using silane and oxygen. The barrier layer 14 made of silicon oxide is formed by, for example, applying a coating solution containing polysilazane, modifying the coating solution, and drying the coating film. The layer structure of the barrier layer 14 may be a single layer structure made of a single compound, a laminated structure having layers made of a single compound, or a laminated structure having layers made of compounds different to each other.

The microlenses 15R, 15G, 15B, and 15P are each formed by forming a coating film containing a transparent resin, patterning the coating film using photolithography, and reflow soldering it by thermal treatment. Examples of transparent resins include acrylic resin, polyamide resin, polyimide resin, polyurethane resin, polyester resin, polyether resin, polyolefin resin, polycarbonate resin, polystyrene resin, and norbornene resin.

[Production Example]

[Production Example 1]

Production Examples 1-1 to 1-6 will be described with reference to Table 1. Note that, in the copolymers prepared according to Production Example 1 described below, the weight ratio of the repeating units in the prepared copolymer is the same as the weight ratio of the monomers at the time the copolymer was formed.

[Table 1]

| Production example | First repeating unit | Second repeating unit | Third repeating unit |
|---|---|---|---|
| | Monomer name | Monomer name | Monomer name |
| 1-1 | Glycidyl methacrylate | 4-hydroxyphenyl methacrylate | Phenyl methacrylate |
| 1-2 | Glycidyl methacrylate | N-(4-hydroxyphenyl) methacrylamide | Phenyl methacrylate |
| 1-3 | Glycidyl methacrylate | N-(4-hydroxyphenyl)maleimide | Phenyl methacrylate |
| 1-4 | (3-ethyloxetan-3-yl)methyl methacrylate | 4-hydroxyphenyl methacrylate | Phenyl methacrylate |
| 1-5 | Glycidyl methacrylate | 4-hydroxyphenyl methacrylate | Dicyclopentanyl methacrylate |
| 1-6 | - | - | Phenyl methacrylate |

[Production Example 1-1]

300 parts by weight of propylene glycol monomethyl ether acetate (PGMAc) was prepared as the polymerization solvent. In addition, 15 parts by weight of glycidyl methacrylate, 15 parts by weight of 4-hydroxyphenyl methacrylate, and 70 parts by weight of phenyl methacrylate were prepared as acrylic monomers.

1.5 parts by weight of benzoyl peroxide (BPO) was prepared as a radical polymerization initiator. These components were put in a reaction vessel equipped with a stirrer and a reflux tube, and stirred and refluxed for 8 hours at 80°C introducing nitrogen gas into the reaction vessel. As a result, a polymer solution containing a copolymer formed from glycidyl methacrylate, 4-hydroxyphenyl methacrylate, and phenyl methacrylate was obtained.

[Production Example 1-2]

The 4-hydroxyphenyl methacrylate in Production Example 1-1 was changed to N-(4-hydroxyphenyl) methacrylamide. A polymer solution containing a copolymer formed from glycidyl methacrylate, N-(4-hydroxyphenyl) methacrylamide, and phenyl methacrylate was obtained in the same manner as in Production Example 1-1 except for the above change.

[Production Example 1-3]

The 4-hydroxyphenyl methacrylate in Production Example 1-1 was changed to N-(4-hydroxyphenyl) maleimide. A polymer solution containing a copolymer formed from glycidyl methacrylate, N-(4-hydroxyphenyl) maleimide, and phenyl methacrylate was obtained in the same manner as in Production Example 1-1 except for the above change.

[Production Example 1-4]

The glycidyl methacrylate in Production Example 1-1 was changed to (3-ethyloxetan-3-yl)methyl methacrylate. A polymer solution containing a copolymer formed from (3-ethyloxetan-3-yl)methyl methacrylate, 4-hydroxyphenyl methacrylate, and phenyl methacrylate was obtained in the same manner as in Production Example 1-1 except for the above

change.

[Production Example 1-5]

The phenyl methacrylate in Production Example 1-1 was changed to dicyclopentanyl methacrylate. A polymer solution containing a copolymer formed from glycidyl methacrylate, 4-hydroxyphenyl methacrylate, and dicyclopentanyl methacrylate was obtained in the same manner as in Production Example 1-1 except for the above change.

[Production Example 1-6]

100 parts by weight of phenyl methacrylate was prepared as a monomer in Production Example 1-1. A polymer solution containing a copolymer formed only from phenyl methacrylate was obtained in the same manner as in Production Example 1-1 except for the above preparation.

[Production Example 2]

Production Examples 2-1 to 2-11 will be described with reference to Table 2. In Production Example 2, the first repeating unit is derived from glycidyl methacrylate (GMA), the second repeating unit is derived from 4-hydroxyphenyl methacrylate (HPMA), and the third repeating unit is derived from phenyl methacrylate (PhMA). In the copolymers prepared according to Production Example 2, the weight ratio of the repeating units in the prepared copolymer is the same as the weight ratio of each monomer at the time the copolymer was formed.

[Table 2]

| Production example | First repeating unit | Second repeating unit | Third repeating unit |
|---|---|---|---|
| | Monomer name | Monomer name | Monomer name |
| | GMA | HPMA | PhMA |
| 2-1 | 20 | 10 | 70 |
| 2-2 | 15 | 15 | 70 |
| 2-3 | 10 | 20 | 70 |
| 2-4 | 7.5 | 22.5 | 70 |
| 2-5 | 6 | 24 | 70 |
| 2-6 | 5 | 25 | 70 |
| 2-7 | 17.5 | 17.5 | 65 |
| 2-8 | 11.5 | 23.5 | 65 |
| 2-9 | 10 | 25 | 65 |
| 2-10 | 20 | 20 | 60 |
| 2-11 | 25 | 25 | 50 |

[Production Example 2-1]

The following changes were made to Production Example 1-1: the amount of glycidyl methacrylate was changed to 20 parts by weight, the amount of 4-hydroxyphenyl methacrylate was changed to 10 parts by weight, and the amount of phenyl methacrylate was changed to 70 parts by weight. As a result, the ratio by weight of 4-hydroxyphenyl methacrylate to glycidyl methacrylate was set to 0.5. A polymer solution containing a copolymer formed from glycidyl methacrylate, 4-hydroxyphenyl methacrylate, and phenyl methacrylate was obtained in the same manner as in Production Example 1-1 except for the above change.

[Production Example 2-2]

The following changes were made to Production Example 2-1: the amount of glycidyl methacrylate was changed to 15 parts by weight, and the amount of 4-hydroxyphenyl was changed to 15 parts by weight. As a result, the ratio by

weight of 4-hydroxyphenyl methacrylate to glycidyl methacrylate was set to 1.0. A polymer solution containing a copolymer formed from glycidyl methacrylate, 4-hydroxyphenyl methacrylate, and phenyl methacrylate was obtained in the same manner as in Production Example 2-1 except for the above change.

[Production Example 2-3]

The following changes were made to Production Example 2-1: the amount of glycidyl methacrylate was changed to 10 parts by weight and the amount of 4-hydroxyphenyl methacrylate was changed to 20 parts by weight. As a result, the ratio by weight of 4-hydroxyphenyl methacrylate to glycidyl methacrylate was set to 2.0. A polymer solution containing a copolymer formed from glycidyl methacrylate, 4-hydroxyphenyl methacrylate, and phenyl methacrylate was obtained in the same manner as in Production Example 2-1 except for the above change.

[Production Example 2-4]

The following changes were made to Production Example 2-1: the amount of glycidyl methacrylate was changed to 7.5 parts by weight and the amount of 4-hydroxyphenyl methacrylate was changed to 22.5 parts by weight. As a result, the ratio by weight of 4-hydroxyphenyl methacrylate to glycidyl methacrylate was set to 3.0. A polymer solution containing a copolymer formed from glycidyl methacrylate, 4-hydroxyphenyl methacrylate, and phenyl methacrylate was obtained in the same manner as in Production Example 2-1 except for the above change.

[Production Example 2-5]

The following changes were made to Production Example 2-1: the amount of glycidyl methacrylate was changed to 6 parts by weight and the amount of 4-hydroxyphenyl methacrylate was changed to 24 parts by weight. As a result, the ratio by weight of 4-hydroxyphenyl methacrylate to glycidyl methacrylate was set to 4.0. A polymer solution containing a copolymer formed from glycidyl methacrylate, 4-hydroxyphenyl methacrylate, and phenyl methacrylate was obtained in the same manner as in Production Example 2-1 except for the above change.

[Production Example 2-6]

The following changes were made to Production Example 2-1: the amount of glycidyl methacrylate was changed to 5 parts by weight and the amount of 4-hydroxyphenyl methacrylate was changed to 25 parts by weight. As a result, the ratio by weight of 4-hydroxyphenyl methacrylate to glycidyl methacrylate was set to 5.0. A polymer solution containing a copolymer formed from glycidyl methacrylate, 4-hydroxyphenyl methacrylate, and phenyl methacrylate was obtained in the same manner as in Production Example 2-1 except for the above change.

[Production Example 2-7]

The following changes were made to Production Example 2-1: the amount of glycidyl methacrylate was changed to 17.5 parts by weight, the amount of 4-hydroxyphenyl methacrylate was changed to 17.5 parts by weight, and the amount of phenyl methacrylate was changed to 65 parts by weight. As a result, the ratio by weight of 4-hydroxyphenyl methacrylate to glycidyl methacrylate was set to 1.0. A polymer solution containing a copolymer formed from glycidyl methacrylate, 4-hydroxyphenyl methacrylate, and phenyl methacrylate was obtained in the same manner as in Production Example 2-1 except for the above change.

[Production Example 2-8]

The following changes were made to Production Example 2-7: the amount of glycidyl methacrylate was changed to 11.5 parts by weight and the amount of 4-hydroxyphenyl methacrylate was changed to 23.5 parts by weight. As a result, the ratio by weight of 4-hydroxyphenyl methacrylate to glycidyl methacrylate was set to 2.0. A polymer solution containing a copolymer formed from glycidyl methacrylate, 4-hydroxyphenyl methacrylate, and phenyl methacrylate was obtained in the same manner as in Production Example 2-7 except for the above change.

[Production Example 2-9]

The following changes were made to Production Example 2-7: the amount of glycidyl methacrylate was changed to 10 parts by weight and the amount of 4-hydroxyphenyl methacrylate was changed to 25 parts by weight. As a result, the ratio by weight of 4-hydroxyphenyl methacrylate to glycidyl methacrylate was set to 2.5. A polymer solution containing

a copolymer formed from glycidyl methacrylate, 4-hydroxyphenyl methacrylate, and phenyl methacrylate was obtained in the same manner as in Production Example 2-7 except for the above change.

[Production Example 2-10]

The following changes were made to Production Example 2-7: the amount of glycidyl methacrylate was changed to 20 parts by weight, the amount of 4-hydroxyphenyl methacrylate was changed to 20 parts by weight, and the amount of phenyl methacrylate was changed to 60 parts by weight. As a result, the ratio by weight of 4-hydroxyphenyl methacrylate to glycidyl methacrylate was set to 1.0. A polymer solution containing a copolymer formed from glycidyl methacrylate, 4-hydroxyphenyl methacrylate, and phenyl methacrylate was obtained in the same manner as in Production Example 2-7 except for the above change.

[Production Example 2-11]

The following changes were made to Production Example 2-7: the amount of glycidyl methacrylate was changed to 25 parts by weight, the amount of 4-hydroxyphenyl methacrylate was changed to 25 parts by weight, and the amount of phenyl methacrylate was changed to 50 parts by weight. As a result, the ratio by weight of 4-hydroxyphenyl methacrylate to glycidyl methacrylate was set to 1.0. A polymer solution containing a copolymer formed from glycidyl methacrylate, 4-hydroxyphenyl methacrylate, and phenyl methacrylate was obtained in the same manner as in Production Example 2-7 except for the above change.

[Test Examples]

[Test Example 1]

In Test Example 1, six kinds of infrared cut filters were obtained using the copolymers of Production Examples 1-1 to 1-6 as follows. The light absorbance of each infrared cut filter was calculated as described below before the tests, after the stripping liquid resistance test, and after the heat resistance test. When preparing the infrared cut filter of each test example, an infrared cut filter used for the stripping liquid resistance test described below and an infrared cut filter used for the heat resistance test described below were separately prepared.

A coating solution was prepared containing 0.3 g of cyanine dye, 12.0 g of 25% polymer solution, and 10 g of propylene glycol monomethyl ether acetate. A dye represented by the above Formula (6) was used as the cyanine dye, and six kinds of polymer solutions respectively containing the copolymers obtained in Production Examples 1-1 to 1-6 were used. The coating solution was applied onto a transparent substrate and the coating film was dried. Then, the coating film was cured by heating it at 230°C, and infrared cut filters of Test Examples 1-1 to 1-6 each having a thickness of 1.0 μm were obtained.

[Evaluation Method]

[Spectral Characteristic]

Using a spectrophotometer (U-4100 manufactured by Hitachi High-Tech Corporation), the transmittance of the infrared cut filter of each test example to light having wavelengths from 350 nm to 1150 nm was measured. Then, the absorbance was calculated from the measured transmittance results. An absorbance spectrum was thus obtained for each infrared cut filter. The absorbance spectrum of a cyanine dye represented by the above Formula (6) has a peak at 950 nm. Therefore, whether the absorbance at 950 nm is 0.8 or higher was checked for each infrared cut filter. An infrared cut filter having an absorbance of 0.8 or higher at 950 nm has an infrared absorptivity suitable for use in a solid-state image sensor.

[Stripping Liquid Resistance]

After measuring the transmittance of the infrared cut filter of each test example, the infrared cut filter of each test example was immersed in the stripping liquid for one minute. The transmittance of the infrared cut filter of each test example after the immersion was measured in the same way the transmittance of the infrared cut filter of each test example was measured before the immersion. Then, the absorbance was calculated from the measured transmittance results. An absorbance spectrum was thus obtained for each of the infrared cut filters of the test examples after the immersion. Whether the absorbance of the infrared cut filter of each test example after the immersion was 0.7 or higher at 950 nm was checked. An infrared cut filter that has been immersed in the stripping liquid but having an absorbance

of 0.7 or higher at 950 nm has an infrared absorptivity suitable for use in a solid-state image sensor.

[Heat Resistance]

After measuring the transmittance of the infrared cut filter of each test example, the infrared cut filter of each test example was heated at 250°C. The transmittance of the infrared cut filter of each test example after being heated was measured in the same way the transmittance of the infrared cut filter of each test example was measured before the heating. Then, the absorbance was calculated from the measured transmittance results. An absorbance spectrum was thus obtained for each of the infrared cut filters of the test examples after the heating. Whether the absorbance of the infrared cut filter of each test example after the heating was 0.7 or higher at 950 nm was checked. An infrared cut filter that has been heated at 250°C but having an absorbance of 0.7 or higher at 950 nm has an infrared absorptivity suitable for use in a solid-state image sensor.

[Evaluation Results]

The calculated absorbances of the infrared cut filters of Test Examples 1-1 to 1-6 were as shown in Table 3 below. Note that, for each test example, it was confirmed that the absorbance of the infrared cut filter prepared for the stripping liquid resistance test before conducting the test is the same as the absorbance of the infrared cut filter prepared for the heat resistance test before conducting the test.

[Table 3]

| Test example | Before test | After stripping liquid resistance test | After heat resistance test |
|---|---|---|---|
| 1-1 | 0.96 | 0.85 | 0.80 |
| 1-2 | 0.96 | 0.85 | 0.82 |
| 1-3 | 0.96 | 0.85 | 0.82 |
| 1-4 | 0.96 | 0.77 | 0.77 |
| 1-5 | 0.96 | 0.74 | 0.72 |
| 1-6 | 0.96 | 0.05 | 0.30 |

As shown in Table 3, the absorbances of Test Examples 1-1 to 1-6 before the resistance test were 0.96.
Therefore, the infrared cut filters of Test Examples 1-1 to 1-6 before the resistance tests had an absorbance of 0.8 or higher at 950 nm.
After the stripping liquid resistance test, the infrared cut filters of Test Examples 1-1, 1-2, and 1-3 had an absorbance of 0.85. The infrared cut filter of Test Example 1-4 had an absorbance of 0.77, the infrared cut filter of Test Example 1-5 had an absorbance of 0.74, and the infrared cut filter of Test Example 1-6 had an absorbance of 0.05.
These results show that copolymers having a first repeating unit with a cyclic ether group and a second repeating unit with a phenolic hydroxyl group as a functional group that reacts with the cyclic ether group have an improved stripping liquid resistance.
As shown in Table 3, after the heat resistance test, the infrared cut filter of Test Example 1-1 had an absorbance of 0.80, and the infrared cut filter of Test Example 1-2 and the infrared cut filter of Test Example 1-3 had an absorbance of 0.82. The infrared cut filter of Test Example 1-4 had an absorbance of 0.77, the infrared cut filter of Test Example 1-5 had an absorbance of 0.72, and the infrared cut filter of Test Example 1-6 had an absorbance of 0.30.
These results show that copolymers having a first repeating unit with a cyclic ether group and a second repeating unit with a phenolic hydroxyl group as a functional group that reacts with the cyclic ether group have an improved heat resistance.
Consequently, it was found that copolymers having a first repeating unit with a cyclic ether group and a second repeating unit with a functional group that reacts with the cyclic ether group can have both stripping liquid resistance and heat resistance.

[Test Example 2]

In Test Example 2, 11 kinds of infrared cut filters were obtained by using the copolymers of Production Examples 2-1 to 2-11 in the same manner as in Test Example 1. The light absorbance of each infrared cut filter was calculated as described above before the tests, after the stripping liquid resistance test, and after the heat resistance test. When

preparing the infrared cut filter of each test example, an infrared cut filter used for the stripping liquid resistance test described below and an infrared cut filter used for the heat resistance test described below were separately prepared.

[Evaluation Method]

The absorbance spectra of the infrared cut filters of Test Examples 2-1 to 2-11 were obtained in the same manner as in Test Example 1. Further, the infrared cut filters of Test Examples 2-1 to 2-11 were subjected to the stripping liquid resistance test and heat resistance test in the same manner as in Test Example 1. An absorbance spectrum was obtained for each of the infrared cut filters of the test examples after each test as in Test Example 1.

[Evaluation Results]

The calculated absorbances of the infrared cut filters of Test Examples 2-1 to 2-11 were as shown in Table 4 below. Note that, for each test example, it was confirmed that the absorbance of the infrared cut filter prepared for the stripping liquid resistance test before conducting the test is the same as the absorbance of the infrared cut filter prepared for the heat resistance test before conducting the test.

[Table 4]

| Test example | Before test | After stripping liquid resistance test | After heat resistance test |
|---|---|---|---|
| 2-1 | 0.96 | 0.02 | 0.80 |
| 2-2 | 0.96 | 0.85 | 0.80 |
| 2-3 | 0.96 | 0.82 | 0.82 |
| 2-4 | 0.96 | 0.72 | 0.80 |
| 2-5 | 0.96 | 0.30 | 0.80 |
| 2-6 | 0.96 | 0.05 | 0.82 |
| 2-7 | 0.96 | 0.85 | 0.72 |
| 2-8 | 0.96 | 0.80 | 0.80 |
| 2-9 | 0.96 | 0.72 | 0.80 |
| 2-10 | 0.68 | 0.64 | 0.40 |
| 2-11 | 0.59 | 0.55 | 0.21 |

As shown in Table 4, the absorbances of Test Examples 2-1 to 2-9 before the resistance test were 0.96. On the other hand, the absorbance of Test Example 2-10 before the resistance test was 0.68, and the absorbance of Test Example 2-11 before the resistance test was 0.59.

Therefore, the infrared cut filters of Test Examples 2-1 to 2-9 before the tests had an absorbance of 0.8 or higher at 950 nm. On the other hand, the infrared cut filters of Test Examples 2-10 and 2-11 before the tests had an absorbance below 0.8 at 950 nm.

This indicates that the spectral characteristics of the infrared cut filters before the tests were advantageously maintained when the ratio of the third repeating unit in the copolymer was 65% by weight or higher.

Further, after the stripping liquid resistance test, the infrared cut filter of Test Example 2-1 had an absorbance of 0.02, and the infrared cut filter of Test Example 2-2 had an absorbance of 0.85. The infrared cut filter of Test Example 2-3 had an absorbance of 0.82, and the infrared cut filter of Test Example 2-4 had an absorbance of 0.72. The infrared cut filter of Test Example 2-5 had an absorbance of 0.30, and the infrared cut filter of Test Example 2-6 had an absorbance of 0.05.

The infrared cut filter of Test Example 2-7 had an absorbance of 0.85, the infrared cut filter of Test Example 2-8 had an absorbance of 0.80, and the infrared cut filter of Test Example 2-9 had an absorbance of 0.72. The infrared cut filter of Test Example 2-10 had an absorbance of 0.64, and the infrared cut filter of Test Example 2-11 had an absorbance of 0.55.

Therefore, the infrared cut filters of Test Examples 2-2 to 2-4 and 2-7 to 2-9 after the stripping liquid resistance test had absorbances of 0.7 or higher at 950 nm. On the other hand, the infrared cut filters of Test Examples 2-1, 2-5, 2-6, 2-10, and 2-11 after the stripping liquid resistance test had absorbances below 0.7 at 950 nm.

These results indicate that infrared cut filters can have an improved stripping liquid resistance when the proportion of the first repeating unit in the copolymer is 7.5% by weight or higher and 17.5% by weight or lower, and the ratio by weight of the second repeating unit to the first repeating unit is 1.0 or higher and 3 0 or lower.

As shown in Table 4, after the heat resistance test, the infrared cut filters of Test Examples 2-1 and 2-2 had an absorbance of 0.80, and the infrared cut filter of Test Example 2-3 had an absorbance of 0.82. The infrared cut filters of Test Examples 2-4 and 2-5 had an absorbance of 0.80, and the infrared cut filter of Test Example 2-6 had an absorbance of 0.82. The infrared cut filter of Test Example 2-7 had an absorbance of 0.72, and the infrared cut filters of Test Examples 2-8 and 2-9 had an absorbance of 0.80. The infrared cut filter of Test Example 2-10 had an absorbance of 0.40, and the infrared cut filter of Test Example 2-11 had an absorbance of 0.21.

Therefore, the infrared cut filters of Test Examples 2-1 to 2-9 after the heat resistance test had absorbances of 0.7 or higher at 950 nm. On the other hand, the infrared cut filters of Test Examples 2-10 and 2-11 after the heat resistance test had absorbances below 0.7 at 950 nm. These results indicate that, when the ratio by weight of the first repeating unit to the second repeating unit is 0.5 or higher and 5.0 or lower, the heat resistance of the infrared cut filter is maintained, and when the proportion of the third repeating unit is 65% by weight or higher, the heat resistance can be enhanced.

As described above, according to an embodiment of an infrared cut filter, a solid-state image sensor filter, a solid-state image sensor, and a method of producing the solid-state image sensor filter, the effects listed below can be obtained.

(1) The cyclic ether group of the first repeating unit and the functional group that reacts with the cyclic ether group of the second repeating unit are crosslinked and form a crosslinked structure. This suppresses the change in the transmittance of the infrared cut filter 13 caused by heating, and prevents the infrared absorbing dye from eluting into the stripping liquid used for dry etching. As a result, it is possible to improve the heat resistance and the resistance to the stripping liquid of the infrared cut filter 13.

(2) The first monomer having the cyclic ether group preferably includes at least one of an epoxy group and an oxetanyl group since this improves the reactivity between the functional group that reacts with the cyclic ether group of the second repeating unit and the cyclic ether group.

(3) Since the functional group that reacts with the cyclic ether group is acidic, it is possible to prevent the crosslinking reaction from progressing immediately at room temperature during the resin polymerization process.

(4) Since the phenolic hydroxyl group is weakly acidic, crosslinking with the cyclic ether group is unlikely to occur during the resin polymerization process, but easily occurs during the heating process performed to form a coating film. Therefore, the phenolic hydroxyl group is advantageous in terms of ease of coating.

(5) The aromatic ring group or alicyclic group in the third repeating unit can create a distance between cyanine dye molecules that is large enough to prevent association therebetween by placing itself between cyanine dye molecules that are close to each other. This suppresses a change in spectral characteristics at the wavelengths of the light the cyanine dye is expected to absorb.

(6) When the proportions of the first and second repeating units in the copolymer are within the above ranges, it is possible to suppress a decrease in the infrared absorbance of the infrared cut filter 13 after heat treatment and stripping liquid treatment.

(7) When the proportion of the third repeating unit in the copolymer is 65% by weight or higher, it is possible to suppress the deterioration of the spectral characteristics of the infrared cut filter 13 at the wavelengths of the light the cyanine dye is expected to absorb.

(8) When the glass transition temperature of the copolymer is 75°C or higher, it is possible to suppress the change in the infrared transmittance more reliably when the infrared cut filter 13 is heated.

(9) When the average molecular weight of the copolymer is 30,000 or higher and 150,000 or lower, it is possible to suppress the change in the infrared transmittance more reliably when the infrared cut filter 13 is heated.

(10) Since the content of the residual monomers is 20% of lower, the infrared transmittance of the cyanine dye is less likely to change when the infrared cut filter is heated compared with the case where the residual monomer content is higher than 20%.

(11) Since the barrier layer 14 prevents an oxidation source from reaching the infrared cut filter 13, it is possible to protect the infrared cut filter 13 from being oxidized by the oxidation source.

[Modification]

The embodiment described above may be modified and implemented as follows.

[Barrier Layer]

- The barrier layer 14 may be placed not only between the infrared cut filter 13 and the microlenses 15R, 15G, 15B, and 15P, but also on the outer surfaces of the microlenses 15R, 15G, 15B, and 15P.
- The solid-state image sensor 10 may include an anchor layer between the barrier layer 14 and a lower layer of the barrier layer 14. The anchor layer increases the adhesion between the barrier layer 14 and the lower layer of the barrier layer 14. The solid-state image sensor 10 may include an anchor layer between the barrier layer 14 and an upper layer of the barrier layer 14. The anchor layer increases the adhesion between the barrier layer and the upper layer of the barrier layer. The material of the anchor layer is, for example, a polyfunctional acrylic resin or a silane coupling agent.
- The layer structure of the barrier layer 14 may be a single layer structure made of a single compound, a laminated structure having layers made of a single compound, or a laminated structure having layers made of compounds different to each other.
- The barrier layer 14 may function as a flattening layer that fills a gap formed between the surface of the infrared cut filter 13 and the surface of the infrared pass filter 12P.
- The solid-state image sensor filter 10F may not include the barrier layer 14. In such a configuration as well, effects similar to the above (1) can be obtained.

[Others]

- The thickness of the color filters 12R, 12G, and 12B may be the same as or different from that of the infrared pass filter 12P. The color filters 12R, 12G, and 12B may have a thickness of, for example, 0.5 μm or more and 5 μm or less.
- The color filters may be a three-color filter including cyan, yellow and magenta filters. The color filters may also be a four-color filter including cyan, yellow, magenta, and black filters. The color filters may also be a four-color filter including transparent, yellow, red, and black filters.
- The thickness of the color filters 12R, 12G, and 12B may be the same as or different from that of the infrared pass filter 12P. The color filters 12R, 12G, and 12B may have a thickness of, for example, 0.5 μm or more and 5 μm or less.
- The material of the infrared cut filter 13 can contain additives for other functions such as a light stabilizer, an antioxidant, a heat stabilizer, and an antistatic agent.
- The laminated structure of the solid-state image sensor 10 on the side of the infrared cut filter 13 where the light receiving surface 15S is disposed may have an oxygen permeability of 5.0 cc/m$^2$/day/atm or lower. For example, the laminated structure may be another functional layer such as a flattening layer or an adhesion layer, and provide an oxygen permeability of 5.0 cc/m$^2$/day/atm or lower together with the microlenses.
- The solid-state image sensor 10 may include a band-pass filter on the light receiving surface of the microlenses where the light is received. The band-pass filter is a filter that transmits only light having specific wavelengths of visible light and near-infrared light, and has a function similar to that of the infrared cut filter 13. That is, the band-pass filter can cut out unnecessary infrared light that may be detected by the photoelectric conversion devices 11R, 11G, and 11B for each color. This improves the accuracy of detecting visible light by the photoelectric conversion devices 11R, 11G, and 11B for each color and the accuracy of detecting near-infrared light having a wavelength of 850 nm or 940 nm that is to be detected by the infrared photoelectric conversion device 11P.

## Claims

**1.** An infrared cut filter comprising:

a cyanine dye including a cation having a polymethine and a nitrogen-containing heterocycle at each end of the polymethine, and a tris(pentafluoroethyl)trifluorophosphate anion; and

a copolymer including a first repeating unit derived from a first monomer that is an acrylic monomer having a cyclic ether group and represented by formula (1) below, and a second repeating unit derived from a second monomer that is a monomer having a functional group that reacts with the cyclic ether group:

[Chemical Formula 1]

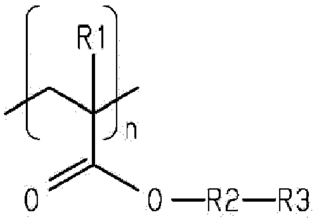

...... Formula (1)

wherein in the formula (1), R1 is a hydrogen atom or a methyl group, R2 is a single bond, a linear alkylene group having one or more carbon atoms, or a branched alkylene group having three or more carbon atoms, and R3 is a cyclic ether group having an oxygen atom and two or more carbon atoms.

2. The infrared cut filter according to claim 1, wherein the first monomer has at least one of an epoxy group and an oxetanyl group.

3. The infrared cut filter according to claim 1 or 2, wherein the second monomer is acidic.

4. The infrared cut filter according to any one of claims 1 to 3, wherein the functional group that reacts with the cyclic ether group is a phenolic hydroxyl group.

5. The infrared cut filter according to any one of claims 1 to 4, wherein the copolymer includes a third repeating unit derived from an acrylic monomer having an aromatic ring represented by formula (2) below:

[Chemical Formula 2]

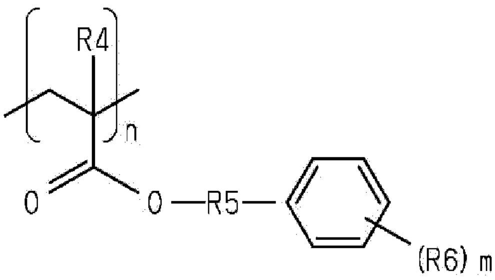

...... Formula (2)

wherein in the formula (2), R4 is a hydrogen atom or a methyl group, R5 is a single bond, a linear alkylene group having one or more carbon atoms, or a branched alkylene group having three or more carbon atoms, and R6 is a hydrogen atom or a predetermined substituent, and, when R6 is the substituent, m is an integer from 1 to 5.

6. The infrared cut filter according to any one of claims 1 to 4, wherein the copolymer includes a third repeating unit derived from an acrylic monomer having an alicyclic structure represented by formula (3) below:

[Chemical Formula 3]

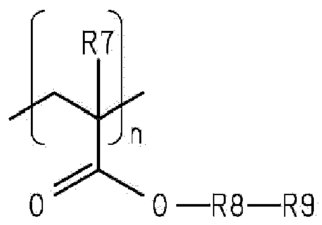

...... Formula (3)

wherein in the formula (3), R7 is a hydrogen atom or a methyl group, R8 is a single bond, a linear alkylene group having one or more carbon atoms, or a branched alkylene group having three or more carbon atoms, and R9 is an alicyclic structure having 3 or more carbon atoms.

**7.** The infrared cut filter according to any one of claims 1 to 6, wherein

the copolymer has the first repeating unit in a proportion of 7.5% by weight or higher and 17.5% by weight or lower, and
a ratio by weight of the second repeating unit to the first repeating unit is 1.0 or higher and 3.0 or lower.

**8.** The infrared cut filter according to claim 5 or 6, wherein the copolymer has the third repeating unit in a proportion of 65% by weight or higher.

**9.** The infrared cut filter according to any one of claims 1 to 8, wherein a glass transition temperature of the copolymer is 75°C or higher.

**10.** The infrared cut filter according to any one of claims 1 to 9, wherein an average molecular weight of the copolymer is 30,000 or higher and 150,000 or lower.

**11.** The infrared cut filter according to any one of claims 1 to 10, wherein, in a solution that has been used to prepare the copolymer, a percentage (MM/MS $\times$ 100) of a mass (MM) of the monomers with respect to a sum (MS) of a mass of the copolymer and a mass of the monomers is 20% or lower.

**12.** A solid-state image sensor filter comprising:

the infrared cut filter according to any one of claims 1 to 11; and
a barrier layer that covers the infrared cut filter and suppresses transmission of an oxidation source that oxidizes the infrared cut filter.

**13.** A solid-state image sensor comprising:

a photoelectric conversion device; and
the solid-state image sensor filter according to claim 12.

**14.** A method of producing a solid-state image sensor filter, comprising:

forming an infrared cut filter including a cyanine dye including a cation having a polymethine, and two nitrogen-containing heterocycles each located at respective ends of the polymethine, and a tris(pentafluoroethyl)trifluorophosphate anion, and a copolymer including a first repeating unit derived from a first monomer that is an acrylic monomer having a cyclic ether group and represented by formula (1) below, and a second repeating unit derived from a second monomer that is a monomer having a functional group that reacts with the cyclic ether group; and
patterning the infrared cut filter using dry etching:

[Chemical Formula 4]

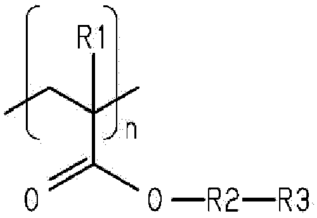

...... Formula (1)

wherein in the formula (1), R1 is a hydrogen atom or a methyl group, R2 is a single bond, a linear alkylene group having one or more carbon atoms, or a branched alkylene group having three or more carbon atoms, and R3 is a cyclic ether group having an oxygen atom and two or more carbon atoms.

FIG.1

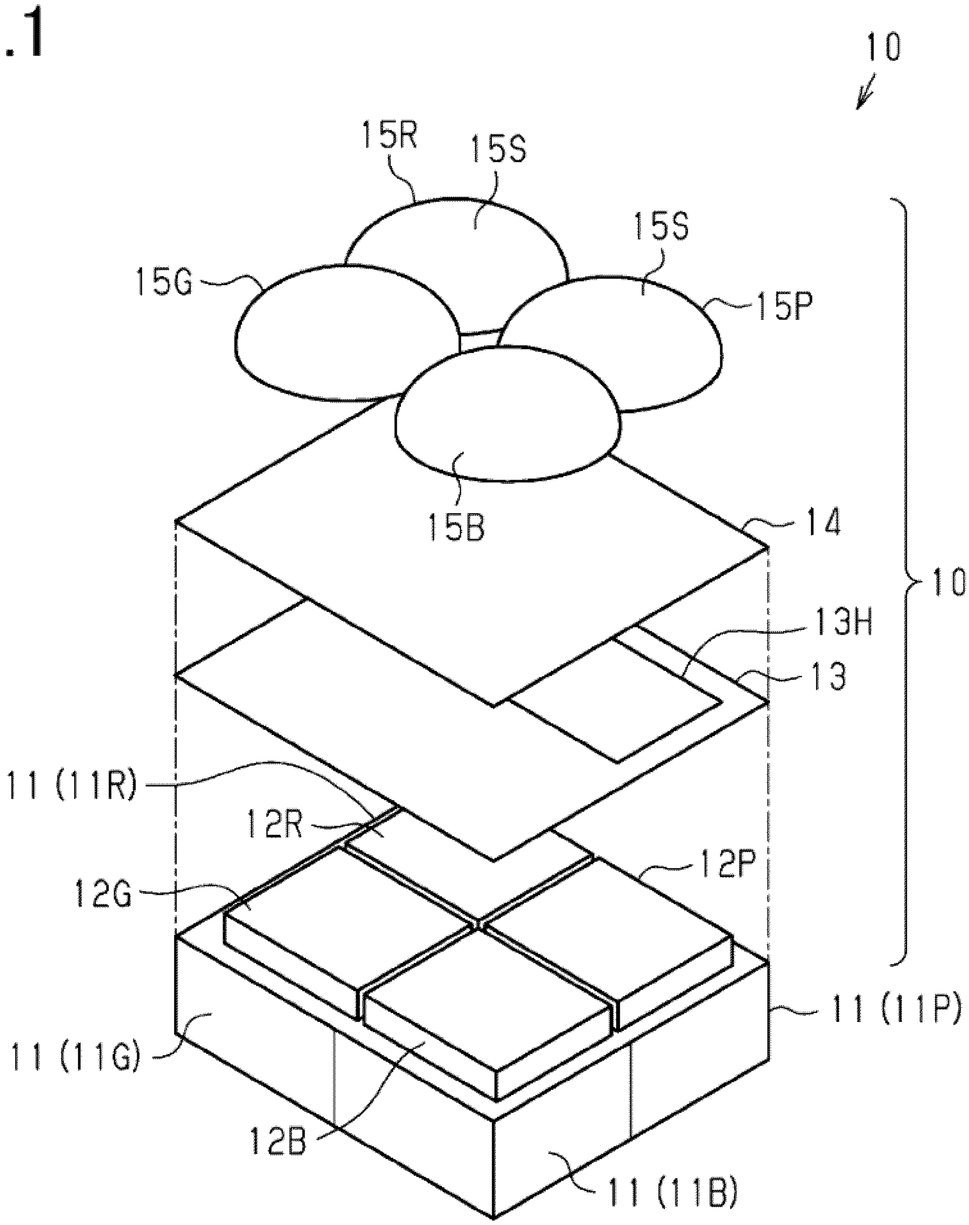
10
15R
15S
15S
15G
15P
15B
14
10F
13H
13
11 (11R)
12R
12P
12G
11 (11P)
11 (11G)
12B
11 (11B)

**INTERNATIONAL SEARCH REPORT**

International application No. PCT/JP2021/025213

A. CLASSIFICATION OF SUBJECT MATTER
Int.Cl. C08F20/26(2006.01)i, C08K5/34(2006.01)i, C08K5/521(2006.01)i, C08L33/14(2006.01)i, G02B5/22(2006.01)i
FI: G02B5/22, C08L33/14, C08F20/26, C08K5/34, C08K5/521
According to International Patent Classification (IPC) or to both national classification and IPC

B. FIELDS SEARCHED
Minimum documentation searched (classification system followed by classification symbols)
Int.Cl. C08F20/26, C08K5/34, C08K5/521, C08L33/14, G02B5/22

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2017/047230 A1 (FUJIFILM CORPORATION) 23 March 2017 (2017-03-23), paragraphs [0032], [0037], [0041], [0136]-[0143], [0164]-[0179], [0216] | 1-14 |
| A | WO 2018/221150 A1 (FUJIFILM CORPORATION) 06 December 2018 (2018-12-06), paragraphs [0047], [0048], [0090]-[0119] | 1-14 |
| A | WO 2019/039159 A1 (FUJIFILM CORPORATION) 28 February 2019 (2019-02-28), paragraphs [0047], [0048], [0074]-[0111] | 1-14 |
| A | JP 2013-155353 A (FUJIFILM CORPORATION) 15 August 2013 (2013-08-15), paragraphs [0008], [0028]-[0050], [0144]-[0181] | 1-14 |

☐ Further documents are listed in the continuation of Box C.   ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 03 August 2021 | 24 August 2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2021/025213

| | | |
|---|---|---|
| WO 2017/047230 A1 | 23 March 2017 | TW 201710362 A |
| WO 2018/221150 A1 | 06 December 2018 | US 2020/0087424 A1<br>paragraphs [0113]-[0120], [0177]-[0208]<br>KR 10-2019-0132521 A<br>TW 201902943 A |
| WO 2019/039159 A1 | 28 February 2019 | US 2020/0183272 A1<br>paragraphs [0108]-[0110], [0145]-[0189]<br>KR 10-2020-0029000 A<br>CN 111032701 A<br>TW 201912725 A |
| JP 2013-155353 A | 15 August 2013 | (Family: none) |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003060176 A
- JP 2018060910 A
- JP 2007219114 A